# EUROPÄISCHE PATENTSCHRIFT

(11) **EP 0 821 444 B1**
(45) Veröffentlichungstag und Bekanntmachung des Hinweises auf die Patenterteilung: **26.02.2003**
(21) Anmeldenummer: 97112621.4
(22) Anmeldetag: 23.07.1997
(51) Int. Cl.: H01R 13/645, H01R 13/00, H01M 2/40, H01M 2/36, H01R 31/06

(54) **Mehrpolige Steckvorrichtung, insbesondere für Elektro-Flurförderzeuge, Batterien oder Ladegeräte**
Multipole connecting device especially for electro-trucks, batteries and chargers
Dispositif de connexion à contacts multiples, en particulier pour chariots électriques, batteries et chargeurs

(30) Priorität: 23.07.1996 DE 29612378 U
(43) Veröffentlichungstag der Anmeldung: 28.01.1998
(73) Patentinhaber: REMA Lipprandt GmbH & Co. KG, D-53175 Bonn (DE)
(72) Erfinder: Lipprandt, Michael, 53842 Troisdorf (DE); Krupp, Willi, 53639 Königswinter-Ittenbach (DE); Passin, Jürgen, 56729 Langenfeld (DE)
(74) Vertreter: Koch, Theodor, Dipl.-Phys.

(56) Entgegenhaltungen:
- EP-A- 0 122 565
- EP-A- 0 484 633
- EP-A- 0 622 859
- EP-A- 0 654 852
- DE-U- 9 016 595
- US-A- 3 842 389
- US-A- 4 232 930
- US-A- 4 857 011

## Beschreibung

Die vorliegende Erfindung betrifft eine mehrpolige Steckvorrichtung oder Geräte-Steckvorrichtung entsprechend dem Oberbegriff des Anspruches 1. Ferner die Verwendung derartiger erfindungsgemäß ausgebildeter Steckverbinder und/oder Geräte-Steckvorrichtungen aus diesen. Solche Steckverbinder und daraus erstellte Geräte-Steckvorrichtungen, welche insbesondere als Lade-Steckvorrichtungen für Batterien von Elektro-Flurförderzeugen wie Gabelstaplern oder auch für andere Elektrofahrzeuge oder Elektroantriebe, insbesondere solche mit nichtwartungsfreien Batterien, wie Nassbatterien, verwendet werden, sind in verschiedensten Ausführungsformen, insbesondere der Kraftfahrzeugtechnik, bekannt.

Die Erfindung betrifft ferner einen Bausatz für ein System erfindungsgemäßer Steckverbinder. Ferner Adapter zur Lagerung von Pilotkontakten in den Aufnahmen von Fluid/Luftkontaktteilen.

Es gilt insbesondere eine geeignete Steckvorrichtung einer Batterie eines Elektroantriebes mit einer solchen Steckvorrichtung einer Batterieladestation zu verbinden, wobei insofern die gesteckten Geräte-Steckvorrichtungen jeweils zusätzlich mit einer Steckvorrichtung für ein Fluid/Lufttransportsystem neben der eigentlichen elektrischen Steckvorrichtung versehbar sein sollen, sofern die Batterie, z.B. während des Ladens, in der Batterieladestation auch zu warten ist.

Beim Überstecken der einzelnen Steckvorrichtungen wird zugleich automatisch mit der elektrischen Verbindung zwischen Batterie und Ladestation auch eine Verbindung für das Fluid/Lufttransportsystem zwischen Batterie und Ladestation hergestellt, so dass beispielsweise während des Ladevorganges an der Batterie ein Abführen von Gasen, Nachfüllen von Säuren und/oder anderen Batterieflüssigkeiten, oder bei an sich wartungsfreien Batterien, ein Umwälzen von Gelflüssigkeit mit Druckluft oder einem anderen Medium erfolgt. Bei nichtwartungsfreien Batterien, wie Nassbatterien, deren Elektrolytflüssigkeit während des Ladevorganges in Zwangsbewegung zu halten ist, wird über die gekoppelten Luftanschlüsse der Steckvorrichtungen der Batterie Druckluft von einer Druckluftversorgungseinheit zugeführt.

Es ist insofern eine einfache Handhabung und eine hohe Betriebs- und Unfallsicherung durch die gemeinsame und gleichzeitige Schaffung der Elektro- und Luft- bzw. Fluidverbindung gegeben.

Gemäß der DE 92 04 385 U ist es bekannt, einen Batteriestecker bestehend aus einem einen koppelbaren Elektroanschluß ausweisenden Gerätestecker und aus einer Gerätesteckdose zusätzlich mit einer in dem Gehäusekörper geführten schlauchförmigen Fluidleitung und mit einer Fluidkupplung zu versehen, wobei diese durch eine Kupplungsmuffe im Steckansatz und ein entsprechendes Rohrstück im Schutzkragen gebildet wird. Die Fluidkupplungsstücke sind in den Längsaufnahmen der an sich dort gemäß Norm vorgesehenen Pilotkontakthülsen eingesteckt.
Auf die Anlage von Pilotkontaktstiften wird insofern dann im Gerätestecker verzichtet.

Alternativ werden Fluidleitung und Fluidkupplungsteile seitlich im Außenbereich des Steckkörpers des Steckerteils und des Steckeraufnahmeteils zusätzlich zu den Pilotkontakten angeordnet.

Gemäß der DE 90 16 595 U erfolgt dabei die Anlage der Fluidleitungen und der Fluidkupplung auf der Außenseite des Gerätesteckers und der Gerätedose, wobei Halterungen vorgesehen sind, durch die die Anschlussteile mit den Fluidhülsen und den in diese Hülsen einsteckbaren Fluidstiften miteinander lösbar festlegbar sind.

Eine derartige Huckepack-Bauweise der Fluidanschlüsse für die Fluidkupplung ist aber insofern nachteilig, als die äußere Abmessung der Geräte-Steckvorrichtung gemäß DIN-Vorschrift nicht mehr eingehalten wird. Zudem bildet die Anlage dieser Teile auf der Oberseite der Steckvorrichtung eine Gefahrenquelle, insbesondere für die Funktion der Steckvorrichtung, wobei weiter nachteilig ist, dass die an den Schlauchtüllen der Fluidanschlüsse anzuschließenden Luft- oder Fluidschläuche ebenfalls auf der Oberseite der Geräte-Steckvorrichtung verlaufen und dort vollkommen ungeschützt von außen zugänglich sind.

Des weiteren ist gemäß der DE 93 05 756 U und der entsprechenden EP-A-0 622 859 eine kombinierte Lade- und Fluidsteckvorrichtung bekannt, bei welcher eine teilweise in dem Gehäuse der Steckvorrichtung integrierte Anlage der Fluidleitungen und Fluidanschlüsse erfolgt, wobei die Fluidleitungen als Kanal in den Führungsstegen des Gerätesteckers geführt sind, welche auf der Innenseite des Führungskragens des Gerätesteckers an sich gemäß Norm angelegt sind und mit Führungsnuten auf der Außenseite des länglichen Steckansatzes der Gerätesteckdose in Eingriff bringbar sind, sofern diese beiden Geräte-Steckvorrichtungen miteinander übersteckt werden.

Die Führungsnuten sind jeweils seitlich rechts und links einer nach außen vorstehenden Aufnahme zur Führung des Codierstiftes sowie oberhalb und seitlich einwärts der Aufnahmen zur Führung der Hauptkontakte angelegt.

Die Fluidleitungen werden in dem Gerätestecker durch jeweils einen in den beiden Führungsstegen verlaufenden Fluidkanal gebildet, welcher außerhalb des Endes des Schutzkragens in einen rohrformigen hülsenartigen frei vorstehenden Ansatz übergeht.

Der Fluidkanal ist in der anderen Richtung bis zu einem Fluidanschluß im Bereich der Zugentlastungsschelle an der Rückseite der Steckvorrichtung geführt.

Bis zu diesem Bereich ist der Fluidkanal insofern unmittelbar im Material der Gehäusewandung der Steckvorrichtung bzw. des Führungsstegs eingeformt. Am äußeren Fluidanschluß ist ein Fluidschlauch aufgesteckt.

Die Anlage der Fluidleitungen in der als Gerätesteckdose ausgebildeten Geräte-Steckvorrichtung erfolgt ebenfalls durch zwei in der Wandung der Steckvorrichtung eingeformte Fluidkanäle, wobei diese im Abstand parallel zueinander bis zum Anfang des Steckansatzes in die dort beginnenden Führungsnuten für die inneren Führungsstege des Schutzkragens des Gerätesteckers verlaufen.

Die Fluidkanäle der Gerätesteckdose weisen einen aufsteckbaren Adapter als Dichtung auf welcher einen äußeren Steckansatz besitzt, der in die mit hülsenförmigen Anschlüssen vorstehenden Ansätze der Fluidkanäle des Schutzkragens eingreift.

Eine derartige kombinierte Lade- und Steckvorrichtung ist insofern von Nachteil, als diese DIN-Vorschriften insofern nicht entspricht, als über das Ende des Schutzkragens ein rohrförmiger Ansatz für den bis dort geführten Fluidkanal vorsteht.
Insofern ist eine Übersteckung einer kombinierten Lade- und Fluidsteckvorrichtung gemäß dieser Druckschrift mit einer DIN-Geräte-Steckvorrichtung für Elektro-Flurförderzeuge gemäß DIN 43589-1 nicht ohne weiteres möglich.

Des weiteren ist von Nachteil, dass die Fluidkanäle fest in dem Gehäuse der Geräte-Steckvorrichtung eingeformt sind und diese nicht als frei geführte Leitungen durch das Innere des Gehäuses der Geräte-Steckvorrichtung geführt sind.

Insofern ist der Innendurchmesser der Fluidkanäle begrenzt, so dass diese einen relativ hohen Strömungswiderstand bilden, wobei zusätzlich eine Schwächung der Wandung der Geräte-Steckvorrichtung eintritt.

Des weiteren ist nachteilig, dass der Adapter an den abgewandeten Enden der Führungsnuten des Steckansatzes in die dortigen Öffnungen der Fluidkanäle nur unter Schwierigkeiten einbringbar und entfernbar ist und im übrigen nach außen vorsteht und insofern ebenfalls eine vollständige Übersteckung der Haupt- und Pilotkontakte behindert.

Sofern diese Dichtung verloren geht, ist eine Kopplung der Fluidsteckvorrichtungen nicht mehr möglich. Des weiteren ist von Nachteil, dass die Anlage von Pilotkontakten, also von Hilfskontakten zur Führung zusätzlicher Ströme und Spannungen, nur beschränkt möglich ist, wobei lediglich die Anlage eines Paares von zwei Pilotkontakten in einer einzigen Steckvorrichtung vorgesehen ist. In der EP-A-0 622 859 wird von Steckvorrichtungen gemäß der eingangs erwähnten DE 90 16 595 U ausgegangen. Es gilt dort gegenüber dieser bekannten Steckvorrichtung eine leichte und kompakte Lade- und Fluidsteckvorrichtung zu schaffen, deren Steckverbinder möglichst mit dem einer älteren Steckvorrichtung gemäß DIN übersteckbar ist.

Es ist daher Aufgabe der vorliegenden Erfindung, Steckverbinder für eine leichte, kompakte mehrpolige, insbesondere zum Anschluß von Elektro-Flurförderzeugen, Batterien oder Ladegeräten dienende Geräte-Steckvorrichtung zu schaffen, welche auch in Form einer kombinierten Lade-Steckvorrichtung mit einem Elektroanschluß und mit Fluid/Luftanschlüssen für ein Fluid- oder Drucklufttransportsystem zur Batteriewartung ausgelegt oder auslegbar ist, wobei es möglich ist, den Gerätestecker oder die Gerätesteckdose trotz Anlage der Fluid/Luftkontaktteile mit herkömmlichen Geräte-Steckvorrichtungen nach DIN, insbesondere der DIN 43589-1, welche keine Fluid/Lußkontakte aufweisen, leichter zu überstecken, wobei insofern also angelegte Fluid/ Luftkontaktteile leicht austauschbar und somit nicht störend sein sollen oder auch zur Übersteckung nicht entfernt werden müssen.

Die Fluid/Luftkontaktteile sollen im Gegensatz zu den Steckverbindern der EP-A-0 622859 weitgehend innerhalb des Gehäuses der Geräte-Steckvorrichtung angelegt sein und mit ihren übersteckbaren buchsen- und stiftförmigen Anschlüssen und Leitungen im Bereich des Steckansatzes der Gerätesteckdose gänzlich innerhalb des Steckansatzes und im Bereich des Gehäuses seitlich des Schutzkragens des Gerätesteckers weitgehend in diesem Gehäusebereich und damit durch das elektrische Steckgesicht verlaufend angelegt sein.
Ferner soll eine Übersteckung der Fluid/Luftkontaktteile auch unter zusätzlicher Übersteckung von Pilotkontakten möglich sein.

Dabei sollen die buchsenförmigen Anschlüsse der Fluid/Luflkontaktteile innerhalb des Steckansatzes der Gerätesteckdose angelegt sein und deren stiftförmige Anschlüsse innerhalb des Schutzkragens des Gerätesteckers neben den dortigen Hauptkontakt- und Pilotkontaktstiften.

Ferner sollen die Fluid/Luftkontaktteile leicht entfernbar sein, so dass insbesondere auch ein Nachrüsten der Geräte-Steckvorrichtung mit diesen sowie auch eine einfache Reparatur und ein Austausch dieser Fluid/Luftkontaktteile gegen zusätzliche Pilotkontakte möglich ist.

Die Erfindung bezweckt ferner die Schaffung eines Bausatzes aus Steckverbinder, Pilotkontaktteilen und Fluid/Luftkontaktteilen, so dass unterschiedliche Steckverbinder und Geräte-Steckvorrichtungen daraus herstellbar sind.

Zur Lösung der eingangs genannten Aufgabe erfolgt die Ausbildung von Steckvorrichtungen für mehrpolige Geräte-Steckvorrichtungen mit den Merkmalen des Anspruches 1.

Es sind insofern gemäß Anspruch l separate längliche Fluid/Luftkontaktteile in der Steckvorrichtung aufgenommen, welche in vergrößerte Aufnahmen von dort gemäß Norm anzulegender Pilotkontakte derart einsteckbar sind, dass diese mit ihren äußeren Fluid/Luftanschlüssen unmittelbar im Steckansatz und innerhalb des äußeren Schutzkragens von Gerätesteckdose und Gerätestecker zu liegen kommen, wobei diese zueinander und zu den Hauptkontakten derart parallel ausgerichtet sind, dass eine Übersteckung auch der Haupt- und Pilotkontakte leicht möglich ist. Alternativ sind in diesen beiden Aufnahmen das gemäß Norm anzulegende Pilotkontaktpaar aufnehmbar. Es ist insofern dann mit Steckvorrichtungen gemäß DIN 43589-1, welche statt Fluid/Luftkontaktteile nur ein Pilotkontaktpaar aufweisen, eine Übersteckung selbst der Pilotkontakte untereinander möglich.

Vorteilhafte Ausbildungen der insbesondere für ein Drucklufttransportsystem zur Wartung von Nassbatterien vorgesehenen Fluid/Luftkontaktteile und deren Lagerung im Fluid/Luftkontaktaufhahmeteil bzw. Gehäuse des Gerätesteckers und der Gerätesteckdose und dieser Steckverbinder selbst, ergeben sich aus den Ansprüchen 2-19.

Gemäß den Ansprüchen 12-17 sind Steckvorrichtungen vorgesehen, bei denen die Fluid/Luftkontaktteile gegen zusätzliche Pilotkontakte ausgetauscht sind, wobei diese in Adapter aufnehmbar und mit diesen in die bereits vorgesehenen, zur Aufnahme der Fluid/Luftkontakte erweiterte und verlängerte Aufnahmebohrungen einbringbar sind.

Zur Halterung sowohl der Fluid/Luftkontaktteile als auch der zusätzlichen Pilotkontakte und Adapter ist gemäß den Ansprüchen 11, 18, 19 und 26 jeweils eine einzige Arretierplatte vorgesehen, welche von einem äußeren lösbaren Verschlussteil der Gehäusewandung abgewinkelt und in einen Führungsschlitz einbringbar ist, der in einem Ansatz eingeformt ist, welcher zum Innern des Kontaktaufnahmeteils frei vorsteht und zusätzlich zur Anlage der unteren Aufnahmen der Fluid/Luftkontaktteile sowie zusätzlicher Pilotkontakte dient.

Die Arretierplatte greift durch Öffnungen des Adapters der zusätzlichen Pilotkontakte und in eingeformte Ausnehmungen bzw. gegen Hinterschneidungen dieser Pilotkontakte oder in Auslassungen an der Außenseite der statt dessen vorgesehenen Fluid/Luftkontaktteile, so dass diese Teile in Längsrichtung der Steckvorrichtung festgelegt werden.

Die Fluid/Luftkontaktteile können gemäß Anspruch 5 in einfachster Weise durch aus starrem Kunststoffmaterial bestehende rohrförmige Einsätze gebildet werden, wobei zwei äußere Rohrstücke in die unteren Aufnahmen einsteckbar sind und ein Y-förmig mit diesen verbundenes und seitlich abgekröpftes Rohrstück nach außen in den Bereich der Zugentlastungsschelle geführt ist und dort einen Anschluß für den zur Ladestation bzw. zur Batterie zu führenden Druckluft- oder Fluidschlauch bildet.

Die Erfindung besteht des weiteren gemäß Anspruch 20 aus einem Bausatz aus Steckverbindern und einer Geräte-Steckvorrichtung daraus und bezieht sich insbesondere auf die Verwendung dieser Vorrichtungen gemäß Anspruch 27. Diese sind in Form einer kombinierten Lade-Steckvorrichtung mit einem Elektroanschluß und mit Fluidkanälen und Fluidanschlüssen herstellbar, insbesondere mit Luftkanälen und Luftanschlüssen für ein Drucklufttransportsystem, beispielsweise zum Anschließen eines Akkumulators (Nassbatterie mit Elektrolytumwälzung) an eine Strom- und Druckluftversorgungseinheit, wobei insofern für die Gerätesteckdose und den Gerätestecker Fluid/Luftkontaktteile in Form von Y-förmigen Rohrstücken vorgesehen sind, welche in die Gehäuse der Geräte-Steckvorrichtung einbringbar und miteinander koppelbar sind, wobei diese Geräte-Steckvorrichtung des weiteren Adapter und zusätzliche Pilotkontakte aufweist, so dass sie z.B. statt mit Luftkanälen und Luftanschlüssen zusätzlich mit weiteren Pilotkontakten versehbar ist und dabei z.B. jeweils zwei Paare mit insgesamt vier Pilotkontakten an der Gerätesteckdose und an dem Gerätestecker aufweist.

Aus dem Bausatz können fünf verschiedene Systeme der Geräte-Steckvorrichtung hergestellt werden:
1. Gerätestecker bzw. Gerätedose mit zwei Hauptkontakten,
2. Gerätestecker bzw. Gerätedose mit zwei Hauptkontakten und zwei Pilotkontakten,
3. Gerätestecker bzw. Gerätedose mit zwei Hauptkontakten und vier Pilotkontakten, zwei Pilotkontakten mit Adaptern in den zwei zusätzlichen unteren Ausnehmungen am Steckgesicht,
4. Gerätestecker bzw. Gerätsdose mit zwei Hauptkontakten und zwei Pilotkontakten und mit einem Fluid/Luftkontaktteil mit zwei verzweigten, parallelen Abschnitten in den zwei unteren zusätzlichen Ausnehmungen und
5. Gerätestecker bzw. Gerätedose mit zwei Hauptkontakten ohne Pilotkontakte aber mit Fluid/Luftkontaktteil in dem Inneren des Kontaktaufnahmeteils und den dortigen zwei unteren zusätzlichen, zum Steckgesicht geführten Ausnehmungen.

Die Ansprüche 21-26 betreffen vorteilhafte Ausbildungen der Adapter zur Lagerung der Pilotkontakte gemäß DIN 43589-1.

Die Erfindung wird nachstehend anhand eines Ausführungsbeispiels und dessen Zeichnungen näher erläutert.

In den Zeichnungen zeigen:

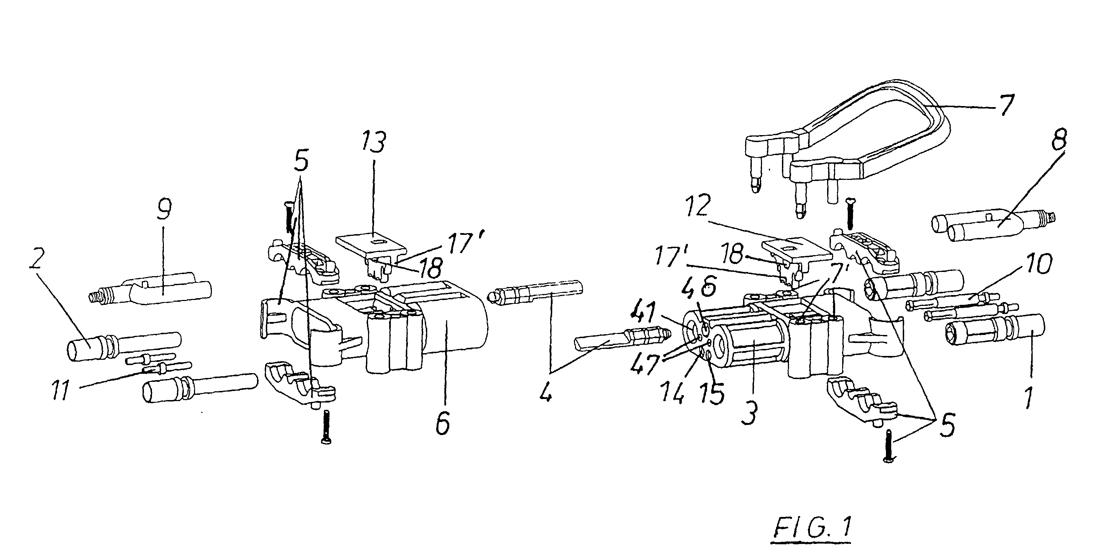

- Figur 1:: Eine gesprengte Darstellung der wesentlichen Teile des erfindungsgemäßen Bausatzes einer Geräte-Steckvorrichtung für Elektro-Flurförderzeuge aus einer Gerätesteckdose und einem Gerätestecker mit zusätzlichen alternativen Anlagen von Luftkontaktteilen in unteren Aufnahmen für einen Luftanschluß eines zur Wartung der Batterien von Elektro-Flurförderzeugen vorgesehenen Lufttransportsystems oder von dort vorzusehenden zusätzlichen unteren Pilotkontakten;

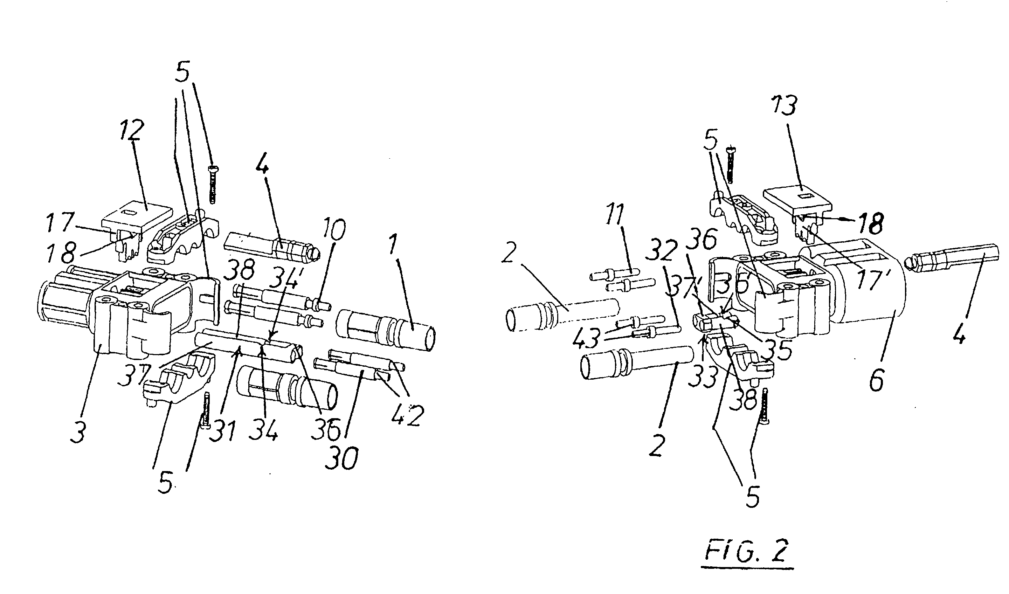

- Figur 2:: Eine gesprengte Darstellung der wesentlichen Teile des erfindungsgemäßen Bausatzes einer Geräte-Steckvorrichtung gemäß Figur 1, wobei statt der als Steckvorrichtungen für ein Lufttransportsystem zu verwendenden Fluid/Luftkontaktteile die zusätzliche Anordnung eines zweiten Paares von Pilotkontakthülsen oder -stiften und zweier Adapter zur Lagerung dieser Pilotkontakte in den unteren, in Figur 1 gezeigten Aufnahmen der Fluid/Luftkontaktteile erfolgt;

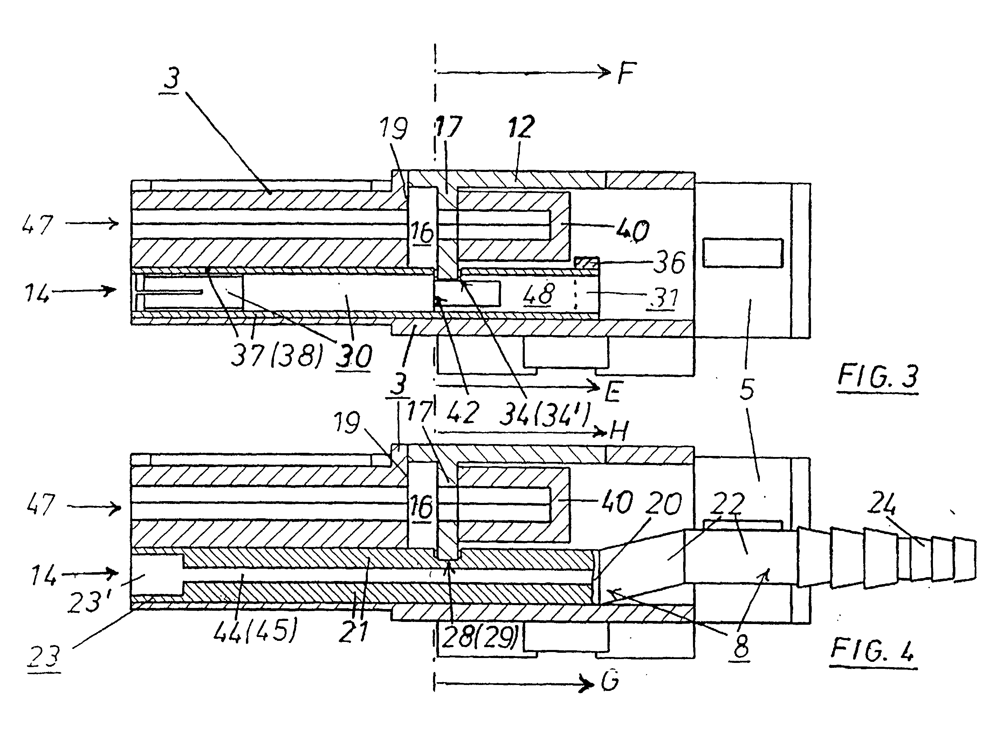

- Figur 3:: Einen Längsschnitt durch das Kontaktauflnahmeteil einer Gerätesteckdose der Geräte-Steckvorrichtung gemäß Figur 2 in einem außermittigen Schnitt von der Halterung der Zugentlastung der Gerätesteckdose zum vorderen Steckansatz unter Darstellung von zwei der vier Aufnahmen für die dort verwendeten vier Pilotkontalkthülsen, wobei in den unteren Aufnahmen, welche alternativ zur Lagerung eines Fluid/Luftkontaktteils des Lufttransportsystems gemäß Figur 1 verwendet werden können, ein länglicher rohrförmiger Adapter eingebracht ist, welcher zur Lagerung einer der zwei zusätzlichen, gegen zwei Fluid/Luftkontaktteile ausgewechselten unteren Pilotkontakthülsen dient,
wobei ferner ein oben auf das Kontaktaufnahmeteil aufschnappbares Verschlussteil mit einer Arretierplatte dargestellt ist, welche u.a. zur Halterung der vier eingebrachten Pilotkontakthülsen und des für die unteren verwendeten Adapters dient;
- Figur 4:: Den Längsschnitt der Figur 3 durch das Kontaktaufhahmeteil einer Gerätesteckdose gemäß Figur 2, wobei statt zweier unterer zusätzlicher Pilotkontakthülsen und des dazugehörenden Adapters in deren Aufnahmen jeweils ein Fluid/Luftkontaktteil der Gerätesteckdose eingebracht ist, welches bereits im Gehäuseabschnitt vor dem Steckansatz sich Y-förmig in zwei parallel auslaufende Rohrstücke verzweigt, mit welchen der Fluid/Luftkontaktteil unmittelbar in die geeignet bemessenen Aufnahmen des Steckansatzes einsteckbar ist und welche jeweils eine obere Eingriffsausnehmung aufweisen, in weiche das Verschiussteil mit seiner nach unten um 90° abgewinkelten Arretierplatte eingreift und somit die Rohrstücke, welche zu den Enden der Rohrstücke jeweils stecker- oder hülsenartig ausgebildet sind, unmittelbar jeweils haltert;

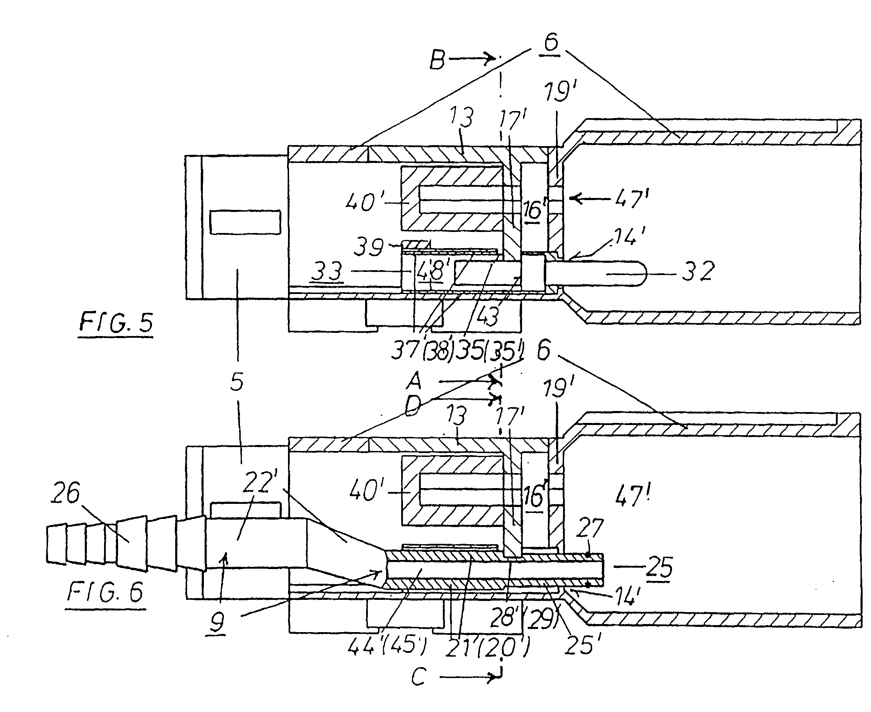

- Figur 5:: Einen Längsschnitt durch den Kontaktaufnahmeteil eines Gerätesteckers unter Darstellung zweier Aufnahmen für Pilotkontakte, wobei in der unteren, alternativ zur Lagerung eines Fluid/Luftkontaktteiles dienenden Aufnahme ein zusätzlich vorgesehener zweiter Pilotkontaktstift mit einem diesen lagernden Adapter eingebracht ist und wobei gemäß der Halterung der zusätzlichen Pilotkontakthülsen in Figur 3 eine Halterung der insgesamt zwei zusätzlichen Pilotkontaktstifte und des für diese in den Aufnahmen angelegten Adapters über ein in einer Öffnung des Kontaktaufnahmeteils aufschnappbares Verschlussteil erfolgt, welches mit einer um 90° abgewinkelten Arretierplatte in den Ausnehmungen bzw. Hinterschneidungen des Adapters und der Pilotkontaktstifte eingreift;
- Figur 6:: Den Längsschnitt der Figur 5 durch den Kontaktaufnahmeteil des Gerätesteckers der Geräte-Steckvorrichtung gemäß Figur 2, wobei statt der zusätzlichen Pilotkontaktstifte mit deren Adapter in den beiden unteren Aufnahmen der Fluid/Luftkontaktteil des Gerätesteckers mit seinen beiden Y-förmig sowohl seitlich als auch nach unten nach vorne in Richtung des Schutzkragens abgewinkelten Rohrstücken eingebracht ist, wobei diese in den Schutzkragen jeweils mit einem Steckansatz ragen, die mit den Steckhülsen des Fluid/Luftkontaktteils der Gerätesteckdose gemäß Figur 4 übersteckbar sind;

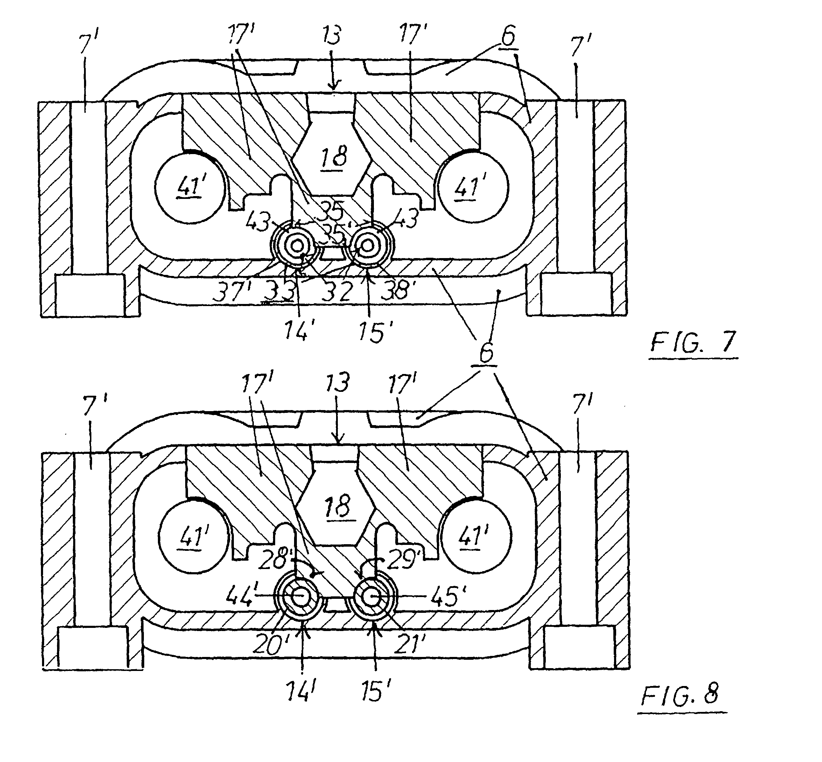

- Figur 7:: Eine Querschnittsansicht durch den Kontaktaufnahmeteildes Gerätesteckers der Figur 2 mit zusätzlichen unteren Pilotkontakten entlang der Schnittlinie A B der Figur 5 in Ansicht auf die Arretierplatte des Verschlussteils, welche mit ihrer Unterseite die beiden Hauptkontakte sowie die zwei zusätzlichen unteren Pilotkontaktstifte festlegt;
- Figur 8:: Eine Querschnittansicht durch das Kontaktaufnahmeteil des Gerätesteckers der Figur 2 mit Luftkontaktteil entlang der Schnittlinie C D der Figur 6, wobei dort durch die Arretierplatte des Verschlussteils außer den beiden Hauptkontaktstiften nun statt der Pilotkontaktstifte die beiden parallelen Rohrstücke des sich Y-förmig verzweigenden Fluid/Luftkontaktteils festgelegt sind, welche in den beiden unteren Aufnahmen seitlich des Schutzkragens des Gerätesteckers eingesteckt sind;

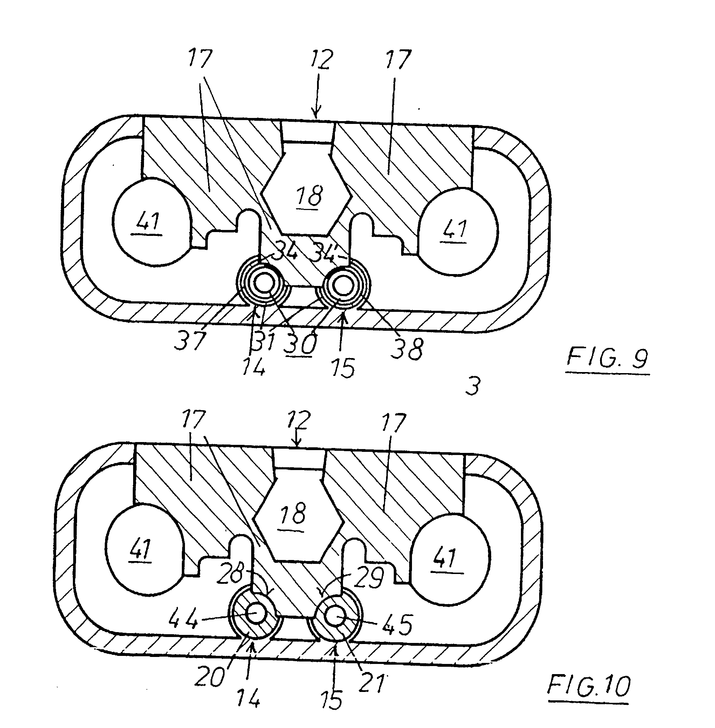

- Figur 9:: Eine Querschnittsansicht durch das Kontaktaufnahmeteil der Gerätesteckdose der Figur 2 gemäß dem in Figur 7 dargestellten Querschnitt durch das Kontaktaufnahmeteil eines Gerätesteckers, wobei in den unteren Aufnahmen des Kontaktaufnahmeteils die beiden Pilotkontakthülsen mit dem diese lagernden Adapter angelegt sind; (Schnitt gemäß Linie E-F in Figur 3)
- Figur 10:: Eine Querschnittansicht durch das Kontaktaufhahmeteil der Gerätesteckdose der Figur 2, wobei in dieser gemäß der Darstellung für einen Gerätestecker nach Figur 8 in den beiden unteren Aufnahmen die Rohrstücke des Y-förmig sich verzweigenden FluidlLuftkontaktteils dieser Gerätesteckdose eingesetzt sind; (Schnitt gemäß Linie G-H der Figur 4);

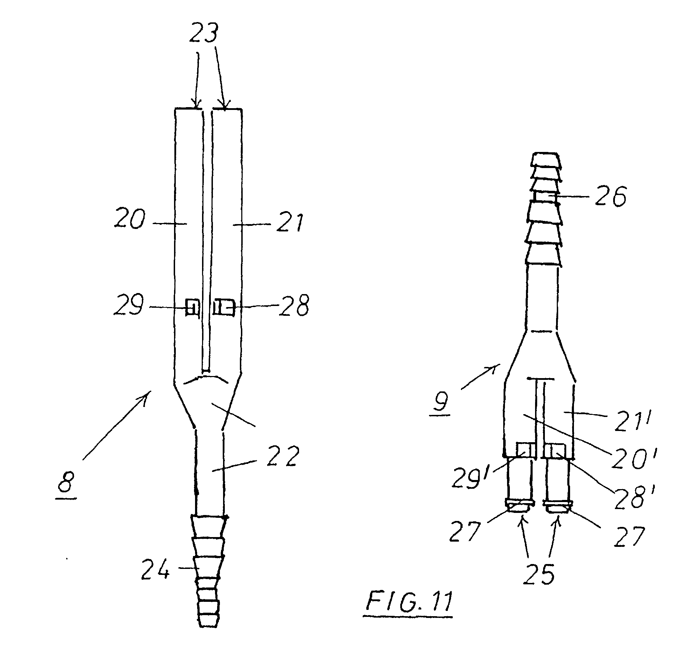

- Figur 11:: Eine Darstellung der Luftkontaktteile für Gerätesteckdose und Gerätestecker;

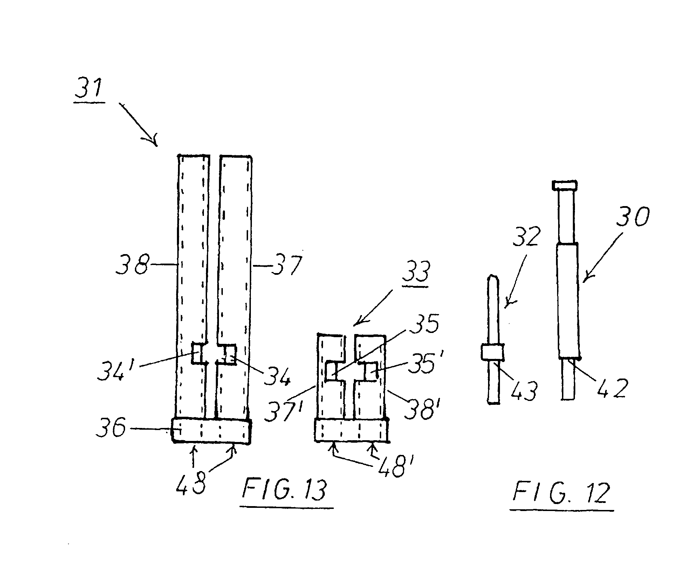

- Figur 12:: Eine Darstellung der zusätzlichen Pilotkontaktstifte und -hülsen;
- Figur 13:: Eine Darstellung der zur Lagerung dieser beiden zusätzlichen Pilotkontaktarten verwendeten Adapter;

In Figur 1 und 2 sind die wesentlichen Bestandteile eines erfindungsgemäßen Bausatzes einer insbesondere als Lade-Steckvorrichtung für Elektro-Flurförderzeuge zu verwendenden mehrpoligen Geräte-Steckvorrichtung,
bestehend aus einer Gerätesteckdose und einem Gerätestecker mit einer gemäß Figur 1 integrierten, zusätzlichen Fluid/Luft-Steckvorrichtung für ein Lufttransportsystem gezeigt, wobei durch das Zusammenstecken von Gerätesteckdose und Gerätestecker z.B. die elektrische Verbindung der Batterie eines Elektro-Flurförderzeuges mit Verbrauchern (z.B. mit einem Motor und/oder einer Batterieladestation) hergestellt wird.

Beim Zusammenfügen der Geräte-Steckvorrichtung wird zugleich automatisch mit der elektrischen Verbindung zwischen Batterie und Ladestation auch eine Verbindung für ein Lufttransportsystem zwischen Batterie und Ladestation hergestellt, so dass beispielsweise während des Ladevorganges an der Batterie ein Abführen von Gasen, Nachfüllen von Säuren und/oder anderen Batterieflüssigkeiten, oder bei wartungsfreien Batterien ein Umwälzen von Gelflüssigkeit mit Druckluft oder einem anderem Medium erfolgen und insbesondere bei nichtwartungsfreien Batterien, wie Nassbatterien, deren Elektrolytflüssigkeit während des Ladevorganges in Zwangsbewegung durch zuzuführende Druckluft versetzt werden kann.

Es ist insofern generell nicht nur ein Lufttransportsystem, sondern ein Fluid/Lufttransportsystem mit Fluid/Luftkontaktteilen für einen Fluid/Luftanschluß (23, 25) gegeben.

Durch die gemeinsame und gleichzeitige Schwung der Elektro- und Luft- oder Fluidverbindung ist eine hohe Betriebs- und Unfallsicherung bei einfächer Handhabung gegeben.

Eine derartige Geräte-Steckvorrichtung mit Fluid- bzw. Lufttransportsystem ist aber für die Verbindung der Batterie des Elektro-Flurförderzeuges mit dessen Motorstecker nicht notwendig, wobei für den Motorstecker oft die Anlage zusätzlicher Hilfskontakte, sogenannter Pilotkontakte wesentlich ist, über weiche weitere Strom- und Spannungsübertragungen, beispielsweise für Steuerimpulse, zusätzlich zu den eigentlichen Hauptkontakten erfolgen können.

Gemäß der Erfindung ist insofern insbesondere vorgesehen, die Geräte-Steckvorrichtung mit einer abänderbaren zusätzlichen Geräte-Steckvorrichtung für ein Lufttransportsystem zu gestalten, und zwar derart, dass z.B. statt der Fluid/Luftkontaktteile in die dortigen unteren Aufnahmen der Steckvorrichtung zu den bereits vorhandenen Pilotkontakten zusätzliche untere Pilotkontakte gemäß Norm einbringbar sind. Eine derartig umgerüstete Geräte-Steckvorrichtung ist dabei in Figur 2 dargestellt, wobei jeder Steckverbinder vier Pilotkontakte aufweist.
Die Erfindung besteht ferner aus einem Bausatz aus einer Geräte-Steckvorrichtung für Elektro-Flurförderzeuge gemäß Figur 1 mit Fluid/Luftkontaktteilen (8,9) und einem zusätzlichen Pilotkontaktpaar (30,32) mit Adaptern (31,33) für die Gerätesteckdose und den Gerätestecker, wobei zusätzlich in den Kontaktaufnahmeteilen der Gerätesteckdose und des Gerätesteckers zwei untere vergrößerte Aufnahmen (14,15; 14',15'), in welchen die Fluid/Luftkontaktteile (8,9) oder zusätzliche Pilotkontakte (30,32) und Adapter dafür einbringbar und festlegbar sind, angelegt sind.

Die Geräte-Steckvorrichtung gemäß Figur 1 besteht aus den links dargestellten Teilen eines Gerätesteckers und rechts dargestellten Teilen einer Gerätesteckdose, nämlich aus den Hauptkontakthülsen (1) und den Hauptkontaktstiften (2), dem Kontaktaufnahmeteil (3) der Gerätesteckdose, den Kontaktaufnahmeteil (6) des Gerätesteckers, den beiden über Passflächen übersteckbaren Codierstiften (4) der Gerätesteckdose und des Gerätesteckers, den Zugentlastungsschellen (5) zur Führung der elektrischen Zuleitung sowie des Luftschlauches, welcher an den Fluid/Luftkontaktteil der Geräte-Steckvorrichtung anzuschließen ist, einem Griff (7) für die Gerätesteckdose oder den Gerätestecker zu deren besseren Handhabung, den Halterungen (7') für den Griff, den Fluid/Luftkontaktteilen (8, 9) des Gerätesteckers und der Gerätesteckdose, den mittig zu den Hauptkontakten angelegten Pilotkontakthülsen (10) und den Pilotkontaktstiften (11), einem Verschiussteil (12) für die Gerätesteckdose sowie einem Verschlussteil (13) für den Gerätestecker, -jeweils mit einer unteren Arretierplatte (17,17').

An dem Steckansatz der Gerätesteckdose erkennt man auf der äußeren dargestellten Steckfläche neben den Öffnungen der Aufnahmen (41) für die Hauptkontakthülsen (1) auch Aufnahmen (47) zwischen diesen für die anzulegenden Pilotkontakthülsen (10). Ferner die Öffnungen der erfindungsgemäßen zusätzlich im Innern des Kontaktaufnahmeteils (3) bis in einen Ansatz (40,40') (siehe Figur 3,4,5 und 6) angelegten beiden unteren Aufnahmen (14,15), welche sich parallel zu den Aufnahmen der Hauptkontakthülsen und Pilotkontakthülsen erstrecken.

Entsprechende Aufnahmen (l4',15') sind im Kontaktaufnahmeteil (6) des Gerätesteckers angelegt, welche sich gemäß Figur 5, 6, 7 und 8 in der Aufnahme des Schutzkragens öffnen und dort dargestellt sind.

In der Geräte-Steckvorrichtung gemäß Figur 2, welche nicht mit den Fluid/Luftkontakten des Lufttransportsystems gemäß Figur 1 ausgestattet ist, sind statt der Fluid/Luftkontaktteile (8,9) zu den bereits vorhandenen Pilotkontakthülsen (10) und Pilotkontaktstiften (11) bei der links dargestellten Gerätesteckdose noch die in deren unteren Aufnahmen (14,15) einzubringenden zusätzlichen Pilotkontakthülsen (30) mit dem zu deren Lagerung in den Aufnahmen (14,15) dienenden Adapter (31) sowie bei der rechten Darstellung des Gerätesteckers die zusätzlich zu verwendenden Pilotkontaktstifte (32) mit deren Adapter (33) für die Lagerung in den zusätzlichen unteren Aufnahmen (14',15') dieses Gerätesteckers dargestellt (siehe Figur 3 und 5 zur Lagerung dieser zusätzlichen Pilotkontakte in den unteren Aufnahmen (14,15) bzw. (14',15-).

Die Lagerung der Fluid/Luftkontaktteile des Lufttransportsystems in den unteren Aufnahmen (14,15) bzw. (14',15') der Kontaktaufnahmeteile (3,6) der Geräte-Steckvorrichtung ergibt sich jeweils für das Kontaktaufnahmeteil (3) der Gerätesteckdose aus dem in Figur 4 dargestellten Längsschnitt durch die Gerätesteckdose der Figur 2 und aus der Querschnittsansicht der Figur 10 entsprechend der Schnittlinie G H der Figur 4 durch die Gerätsteckdose sowie für das Kontaktaufliahmeteil (6) aus dem in Figur 6 dargestellten Längsschnitt durch den Gerätestecker und der gemäß der dortigen Schnittlinie C D geführten Querschnittsansicht gemäß Figur 8.

An einer Querwandung (19,19') an der Rückseite des Steckansatzes der Gerätesteckdose als auch an der Rückseite des Schutzkragens des Gerätesteckers ist dabei jeweils in den Kontaktaufnahmeteilen (3,6) mittig zwischen den Aufnahmen (41,41') der Hauptkontakte ein Ansatz (40,40') angespritzt, in welchem in Längsrichtung der Gerätesteckdose im unteren Teil die beiden unteren Aufnahmen (14, 15) zum Einbringen des Fluid/Luftkontaktteils (8) der Gerätesteckdose bzw. die beiden Aufnahmen (14',15') zum Einbringen des Fluid/Luftkontaktteils (9) des Gerätesteckers angelegt sind, wobei sowohl der Fluid/Luftkontaktteil (9) des Gerätesteckers als auch der Fluid/Luftkontaktteil (8) der Gerätesteckdose sich Y-förmig in zwei parallel verlaufende Rohrstücke (20,21) und (20',21') von einem über den Bereich der Zugentlastungsschelle in das Innere des Kontaktaufnahmeteils geführten, lediglich mittleren einteiligen Rohrstück (22,22') verteilen. Das mittig zu lagernde Rohrstück (22,22') ist gegenüber den Rohrstücken (20,21) bzw. (20',21') nach unten schräg abgekröpft, so dass die Rohrstücke (20,21) und (20',21') in die unteren Aufnahmen (14, 15) bzw. (14',15') einsteckbar sind, welche eine innere Querschnittsabmessung besitzen, welche lediglich geringfügig größer als der Außenquerschnitt der Rohrstücke (20,21) bzw. (20',21') über die gesamte Länge ist (siehe Figur 11).

Insofern kommt das Rohrstück (22,22') der Fluid/Luftkontaktteile (8,9) etwas höher im Innern des Kontaktaufnahmeteils als die Anlage der unteren Aufnahmen (14,15) bzw. (14',15') zu liegen.

Die Rohrstücke (20,21) des Fluid/Luftkontaktteils der Gerätesteckdose weisen dabei am Ende des Steckansatzes sich öffnende Steckhülsen in Form buchsenförmiger Ansätze (23') auf, mit welchen sie bei Übersteckung der Geräte-Steckvorrichtung auf die stiftförmigen Ansätze (25') der im Schutzkragen des Gerätesteckers auslaufenden Rohrstücke (20',21') aufsteckbar sind.

Zur Halterung der Fiuid/Luftkontaktteile (8,9) innerhalb der Aufnahmen (14,15) bzw. (14',15') weisen diese jeweils auf der Oberseite ihrer Rohrstücke (20,21) bzw. (20',21') Eingriffsausnehmungen (28) bzw. (29) in ihren Wandungen auf, wobei diese bei volleingesteckten Rohrstücken unterhalb einer im unteren Bereich sich in Querrichtung schlitzförmig verengenden Auslassung (16,16') zu liegen kommen, welche in dem im Innern des Kontaktaufnahmeteils an der Querwandung (19,19') des Steckansatzes bzw. des Kontaktaufnahmeteils (6) des Gerätesteckers angeformten Ansatz (40,40') angelegt ist.

Die Auslassungen (16,16') sind in dem Kontaktaufnahmeteil (6) des Gerätesteckers gemäß Figur 6 und 8 und in dem Kontaktaufnahmeteil (3) der Gerätesteckdose gemäß Figur 4 und 10 angelegt. In die Auslassung (16,16') ist eine von einem Verschlussteil (12,13) nach unten abstehende Arretierplatte (17,1l7') von oben über eine Öffnung an der Oberseite der Kontaktaufnahmeteile (3,6) derart einschiebbar, dass diese nicht nur mit Ansätzen die Pilotkontakthülsen (10) bzw. Pilotkotaktstifte (11) an deren sich zur Außenseite öffnenden Hinterschneidungen festlegt, sondern auch die Fluid/Luftkontaktteile (8,9) an den Eingriffsausnehmungen (28,29).

Die Arretierplatten (17,17') gehen senkrecht von der Unterseite des Verschlussteils (12) der Gerätesteckdose bzw. des Verschlussteils (13) des Gerätesteckers aus, wobei diese Verschlussteile jeweils zwei beabstandete Rippen aufweisen, welche an einer Lagerung des Codierstiftes im Innern des Kontaktaufnahmeteils aufschnappen. Über die sich öffnende Rückseite der Kontaktaufnahmeteile (3,6) lassen sich dabei die Verschlussteile (12,13) leicht wieder aus dieser Einrastung ausdrücken.

Eine zusätzliche Halterung der Verschlussteile (12,13) erfolgt dabei durch den mittig durch die Kontaktaufnahmeteile (3,6) geführten Codierstift (4), für welchen am oberen Teil der Arretierplatte (17,17') eine Ausnehmung (18) angelegt ist, welche entsprechend der Formgebung des Codierstiftes eine sechseckige Querschnittsöffnung aufweist.

Um nun statt der Fluid/Luftkontaktteile (8,9) die zusätzlichen Pilotkontakthülsen (30) bzw. Pilotkontaktstifte (33) in die Gerätesteckdose gemäß dem Längsschnitt der Figur 3 und der Querschnittsansicht der Figur 9 sowie in den Gerätestecker gemäß dem Längsschnitt der Figur 5 sowie gemäß der Querschnittsansicht der Figur 7 einbringen zu können, ist dabei gemäß Figur 3 und 9 die Verwendung eines Adapters (31) zur Lagerung der Pilotkontakthülsen (30) in den unteren Aufnahmen (14,15) der Gerätesteckdose sowie gemäß Figur 5 und 7 eines Adapters (33) für die Lagerung der Pilotkontaktstifte (32) in den unteren Aufnahmen (14',15') des Gerätesteckers vorgesehen.

Diese Adapter bestehen gemäß Figur 13 jeweils aus zwei längeren Rohrstücken, welche als rohrförmige Fortsätze (37,38) beim Adapter (31) bzw. (37',38') beim Adapter (33) von einem Quersteg (36) bzw. (39) ausgehen. Sie bestehen dabei aus einem Polycarbonat-Kunststoff, welcher beständig gegen Elektrolytflüssigkeiten von Batterien ist. Aus dem gleichen Kunststoff sind die Fluid/Luftkontaktteile (8,9) gefertigt.

Die Querstege (36,39) der Adapter (31,33) kommen dabei beim Einstecken der Adapter in die unteren Aufnahmen (14,15; 14',15') quer vor diesen und der äußeren Wandung des Ansatzes (40,40') frei im Innern des Kontaktaufnahmeteils zu liegen, so dass diese leicht über deren freies Ende ergreifbar und somit die rohrförmigen Adapterfortsätze (37,38) bzw. (37',38') leicht in die unteren Aufnahmen ein- und ausbringbar sind.

Die Adapter (31,33) weisen dabei einen Außenquerschnitt entsprechend dem Durchgangsquerschnitt der Aufnahmen (14,15) bzw. (14',15') auf, wobei der Durchgangsquerschnitt von Längsaufnahmen (48,48') in den rohrförmigen Fortsätzen (37,38) bzw. (37',38') derart bemessen sind, dass dort die zusätzlichen Pilotkontakthülsen (30) bzw. die zusätzlichen Pilotkontaktstifte (32) einbringbar sind. Ihr Durchmesser ist größer als der der Pilotkontakte (10,11) und ihre Länge nach Art der Halterung bemessen.

Diese zusätzlichen Pilotkontakte (10,11) weisen gemäß Figur 12 jeweils eine sich zur Außenseite öffnende Hinterschneidung (42,43) auf, welche bei vollständig eingebrachten Pilotkontakten sich oberhalb der Auslassung (161l6') öffnen, in welche die Arretierplatten (17,17') der Verschlussteile (12,13) einsteckbar sind.

Da die Adapter (31,33) auf ihren rohrförmigen parallelen Fortsätzen (37,38) bzw. (37', 38') zur Oberseite sich ebenfalls öffnenden Ausnehmungen (34,34') bzw. (35,35') aufweisen, welche bei vollständig eingesteckten Adaptern ebenfalls unterhalb den Auslassungen (16,16') zu liegen kommen, werden dabei sowohl die Pilotkontakte als auch deren in die Aufnahmen (14,15) bzw. (14',15') gesteckter Adapter durch die Arretierplatte (17,17') festgelegt.

Die Fluid/Luftkontaktteile (8,9) sind aus einem gegen Elektrolytflüssigkeit beständigen, nicht flexiblen Kunststoffmaterial (Polycarbonat) hergestellt, so dass starre, leicht in die rohrförmig oder als Längsbohrung ausgebildeten Aufnahmen (14,15;14',15') einsteckbare und untereinander übersteckbare längliche Kunststoffteile gegeben sind.

Diese leichte Handhabung wird durch die Anlage und die Y-förmige Abwinkelung der in die unteren Aufnahmen (14,15;14',15') einsteckbaren zwei Rohrstücke (20,21;20',21') von dem dazu abgekröpften, eine Schlauchtülle aufweisenden Rohrstück (22,22') begünstigt.

Die Anlage zweier Rohrstücke (20,21 ;2O', 21') und zweier zum Steckgesicht der Steckverbinder sich öffilender Aufnahmen (14,15;14',15') ermöglichst dabei, die Ognungsquerschnitte der Leitungskanäle (44,45;44',45') der Rohrstücke und damit die der Aufnahmen (14,15;14',15') bei kleinerem Strömungswiderstand gering zu halten. Die Anlage der im Öffungsquerschnitt klein bemessenen Aufnahmen (14,15;14',15) wird insofern vereinfacht.

### Bezugsziffernliste

- 1: Hauptkontakthülse
- 2: Hauptkontaktstifte
- 3: Kontaktaufnahmeteil der Gerätesteckdose
- 4: Codierstift
- 5: Zugentlastungsschelle
- 6: Kontaktaufnahmeteil des Gerätesteckers
- 7, 7': Griff zur Befestigung an dem Kontaktaufnahmeteil der Gerätesteckdose oder des Gerätesteckers
- 7': Halterung dafür
- 8: Fluid/Luftkontaktteil für die Gerätesteckdose
- 9: Fluid/Luftkontaktteil für den Gerätestecker
- 1O: Pilotkontakthülsen
- 11: Pilotkontaktstifte
- 10, 11: zweites Pilotkontaktpaar
- 12: Verschlußteil für die Gerätesteckdose
- 13: Verschlußteil für den Gerätestecker
- 14,15,: zusätzliche untere Aufnahmen, sich bis in einen Ansatz im Innern des Kon-
- 14',15': taktaufnahmeteils der Gerätesteckdose bzw. des Gerätesteckers erstreckend;
- 16,16': Auslassung im Ansatz zur Bildung eines Führungsschlitzes
- 17,17': Arretierplatte der Verschlussteile (12,13)
- 18: Ausnehmung in der Arretierplatte (17,17') zur Halterung des Verschlussteils mit einem dort längs dem Kontaktaufnahmeteil durchzuführenden Codierstift;
- 19,19': Querwandung der Rückseite des Steckansatzes der Gerätesteckdose oder des Gerätesteckers
- 20,21: Rohrstücke des Fluid/Luftkontaktteils (8) der Gerätesteckdose, welche zum Steckansatz verlaufen
- 20',21': Rohrstücke des Fluid/Luftkontaktteils (9) des Gerätesteckers, welche zum Schutzkragen verlaufen
- 22: Rohrstück des Fluid/Luftkontaktteils (8) der Steckdose in Richtung Zugentlastungsschelle
- 22': Rohrstück des Fluid/Luftkontaktteils (9) des Gerätesteckers, welches zur Zugentlastungsschelle ausläuft
- 23: Fluid/Luftanschluß der Gerätesteckdose
- 23': Steckhülsen in Form buchsenförmiger Ansätze am Ende der Rohrstücke (20,21) der Gerätesteckdose
- 24: Schlauchtülle am Rohrstück (22)
- 25: Fluid/Luftanschluß des Gerätesteckers
- 25': stiftförmige Ansätze am Ende der Rohrstücke (20',21') des Gerätesteckers (Steckansätze)
- 26: Schlauchtülle
- 27: Dichtung auf den Steckansätzen (25')
- 28,29,: Eingriffsausnehmungen in den Wandungen der beiden abgezweigten Rohr-
- 28',29': stücke des FIuid/Luftkontaktteils (8) bzw. (9)
- 30: zusätzliche Pilotkontakthülsen
- 31: Adapter zur Lagerung der Pilotkontakthülse (30) in den Aufnahmen (14,15) des Kontaktaufnahmeteils der Gerätesteckdose
- 32: zusätzliche Pilotkontaktstifte
- 30,32: erstes Pilotkontaktpaar
- 33: Adapter für die Lagerung der Pilotkontaktstifte des Gerätesteckers
- 34,34': Ausnehmungen auf der Oberseite des Adapters (31)
- 35,35': Ausnehmungen auf der Oberseite des Adapters (33)
- 36: Quersteg des Adapters (31)
- t 37,38: rohrförmige Fortsätze des Quersteges (36)
- 37', 38': rohrförmige Fortsätze des Quersteges (39)
- 39: Quersteg des Adapters (33)
- 40, 40': Ansatz
- 41,41': Aufnahmen für die Hauptkontakte
- 42,43: Hinterschneidungen an den zusätzlichen Pilotkontakten
- 44,45: Leitungskanal in dem Fluid/Luftkontaktteil (8)
- 44', 45': Leitungskanal in dem Fluid/Luftkontaktteil (9)
- 46: Aufnahme für den Codierstift (4)
- 47,47': Aufnahmen für die Pilotkontakte (10,11)
- 48, 48': Längsaufnahmen im Adapter (31) bzw. (33)

## Patentansprüche

1. Mehrpolige Steckvorrichtung oder Geräte-Steckvorrichtung bestehend aus einem Gerätestecker und/oder einer Gerätesteckdose oder Steckverbindersatz daraus, insbesondere zum Anschluß für Elektro-Flurförderzeuge, Batterien oder Ladegeräte dafür in Form einer kombinierten Lade-Steckvorrichtung mit einem Elektroanschluß und mit Luftkanälen und/oder Luftanschlüssen für ein Drucklufttransportsystem zum Anschließen eines Akkumulators mit Gel- oder Elektrolytumwälzung an eine Strom- und eine Druckluftversorgungseinheit, oder mit sonstigen Fluidkanälen und Fluid- und Elektroanschlüssen, beispielsweise zum Abführen von Gasen, zum Nachfüllen von Säure und/oder anderen Batterieflüssigkeiten,
wobei der Gerätestecker und/oder die Gerätesteckdose jeweils zumindest mit einem miteinander koppelbaren Fluid/Luftanschluß und/oder Elektroanschluß versehen ist,
- die Gerätesteckdose als Gehäuse ein Kontaktaufnahmeteil (3) mit einem Steckansatz aufweist, der zwei parallel zueinander angeordnete Hauptkontakthülsen (1) umgibt, zwischen deren Aufnahmen (41) mittig nach oben versetzt eine Aufnahme (46) für einen Codierstift (4) angeordnet ist, wobei seitlich zwischen der Aufnahme des Codierstiftes und dem übrigen Steckansatz nach außen auf diesem zwei sich parallel zueinander und in Steckrichtung von Gerätestecker und Gerätesteckdose erstreckende Führungsnuten gebildet sind,
- und der Gerätestecker jeweils ein Kontaktaufnahmeteil (6) als Gehäuse aufweist, in welchem zwei Aufnahmen (41') mit parallel zueinander angeordneten Hauptkontaktstiften (2) angelegt sind, welche mit ihren äußeren Stiftabschnitten von einem Schutzkragen am äußeren Ende des Gerätesteckers umgeben sind,
- dessen eine Innenseite mit zwei parallel zueinander angeordneten Führungsstegen versehen ist, die so bemessen und angelegt sind, daß die Außenkontur von den Führungsstegen im gesteckten Zustand von Gerätestecker und Gerätesteckdose, in dem der Schutzkragen den Steckansatz umschließt, in die äußeren Führungsnuten des Gerätesteckers eingreifen,
daß im Kontaktaufnahmeteil (3) der Gerätesteckdose und im Kontaktaufnahmeteil (6) des Gerätesteckers jeweils in Längsrichtung unterhalb der Aufnahmen (46;41,41') des Codierstiftes (4) und der Hauptkontakte (1,2) zwei Aufnahmebohrungen angelegt sind, welche sich in das elektrische Steckgesicht von der Querwandung zum Innern des Kontaktaufnahmeteils (3,6) bis zur äußeren Stirnseite des Steckansatzes der Gerätesteckdose oder bis zum Übergang im Kontaktaufnahmeteil (6) des Gerätesteckers zum Schutzkragen erstrecken, in welche Pilotkontakte (30,32) eines ersten Pilotkontaktpaares einsteckbar und lösbar festlegbar sind,
**dadurch gekennzeichnet, daß**
diese Aufnahmebohrungen für ein erstes Pilotkontaktpaar zur Bildung eines Fluid/Luftanschlusses als Aufnahmen (14,15;14',15') zur Längsführung von rohrförmigen länglichen Fluid/Luftkontaktteilen (8,9) erweitert und verlängert sind, welche zumindest einen inneren Leitungskanal (44,45;44',45') aufweisen und aus einem gegen Elektrolytflüssigkeit beständigen Kunststoff bestehen und in die Aufnahmen (14,15;14',15') einsteckbar und dort lösbar festlegbar sind und im Steckansatz der Gerätesteckdose oder im Innern des Schutzkragens des Gerätesteckers mit dem zumindest einen äußeren Fluidy/Luftanschluß (23,25) münden,
wobei diese Ftuid/Luftanschlüsse (23,25) mit stift- und buchsenförmigen Ansätzen (23',25') zum Überstecken der Geräte-Steckvorrichtung ausgerichtet sind, wobei in den Aufnahmen (14,15;14',15') jeweils als Teil der Steckvorrichtung ein Fluid/Luftkontaktteil (8,9) aufgenommen ist oder auch alternativ ein Adapter (31,33) und die Pilotkontakte (30,32) des ersten Pilotkontaktpaares aufnehmbar sind.

2. Mehrpolige Steckvorrichtung oder Geräte-Steckvorrichtung bestehend aus einem Gerätestecker und/oder einer Gerätesteckdose oder Steckverbindersatz daraus nach Anspruch 1,
**dadurch gekennzeichnet, daß**
zur Lagerung eines zweiten Pilotkontaktpaares (10,11) von dem Steckansatz bis in das Innere des Kontaktaufnahmeteils (3) der Gerätesteckdose sich erstreckend zwei beabstandete parallele Aufnahmen (47) direkt zwischen den äußeren parallelen Aufnahmen (41) der Hauptkontakthülsen (1) zur Lagerung von Pilotkontakthülsen (10) angelegt sind und längs dieser Aufnahmen (41) und der Aufnahme (46) des Codierstiftes (4) verlaufen
und daß der Gerätestecker ferner zumindest zwei Aufnahmen (47') für Pilotkontaktstifte (11) mittig zwischen den äußeren Aufnahmen (41') der Hauptkontaktstifte (2) aufweist, wobei die Aufnahmen (47') längs dieser Aufnahmen (41') und der mittig zwischen diesen nach oben versetzten Aufnahme (46) des Codierstiftes (4) verlaufen.

3. Mehrpolige Steckvorrichtung oder Geräte-Steckvorrichtung bestehend aus einem Gerätestecker und/oder einer Gerätesteckdose oder Steckverbindersatz daraus nach Anspruch 1 oder 2,
**dadurch gekennzeichnet, daß**
die zwei Aufnahmen (14,15;14',15') unterhalb der Aufnahmen (46;41,41') angelegt und im Inneren des Kontaktaufnahmeteils (3,6) in einem Ansatz (40,40') zwischen und/oder unterhalb der Aufnahmen (41,41') der Hauptkontakte (1,2) und der Aufnahmen (47,47') der Pilotkontakte (10,11) fortgeführt sind, welcher von der inneren Gehäusequerwandung (19,19'), in welcher die Aufnahme der Hauptkontakte (1,2) und Pilotkontakte (10,11;30,32) nach vorne ausläuft, sich in das Innere des Kontaktaufnahmeteils (3,6) erstreckt.

4. Mehrpolige Steckvorrichtung oder Geräte-Steckvorrichtung bestehend aus einem Gerätestecker und/oder einer Gerätesteckdose oder Steckverbindersatz daraus nach Anspruch 2 oder 3,
**dadurch gekennzeichnet, daß**
sie mit Pilotkontakthülsen (10) und/oder -stiften (11) des zweiten Pilotkontaktpaares in den Aufnahmen (47,47') versehen sind.

5. Mehrpolige Steckvorrichtung oder Geräte-Steckvorrichtung bestehend aus einem Gerätestecker und/oder einer Gerätesteckdose oder Steckverbindersatz daraus nach einem der Ansprüche 1-4,
**dadurch gekennzeichnet, daß**
die einen inneren Leitungskanal (44,45;44',45') aufweisenden länglichen Fluid/Luftkontaktteile (8,9) aus zwei länglichen, parallel im Abstand zueinander verlaufenden, in die unteren Aufnahmen (14,15;14',15') einsteckbaren Rohrstücken (20,21;20',21') und aus einem mit diesen Y-förmig angelegten und seitlich abgewinkelten, zum Ende des Kontaktaufnahmeteils (3,6) auslaufenden Rohrstück (22,22') bestehen, wobei dieses in eine äußere Schlauchtülle (24,26) zum Anschluß an die Druckluft- oder Fluidversorgungseinheit oder an die zu wartende Batterie ausläuft.

6. Mehrpolige Steckvorrichtung oder Geräte-Steckvorrichtung bestehend aus einem Gerätestecker und/oder einer Gerätesteckdose oder Steckverbindersatz daraus nach einem der Ansprüche 1-5,
**dadurch gekennzeichnet, daß**
der Fluid/Luftanschluß (23) des in die untere Aufnahme (14,15) der Gerätesteckdose einsteckbaren Fluid/Luftkontaktteils (8) zwei buchsenförmige Ansätze (23') aufweist und der Fluid/Luftanschluß (25) des in die Aufnahme (14',15') des Gerätesteckers einsteckbaren Fluid/Luftkontaktteils (9) zwei stiftförmige Ansätze (25'), wobei die Ansätze (25') durch die buchsenförmigen Ansätze (23') außen übersteckbar sind.

7. Mehrpolige Steckvorrichtung oder Geräte-Steckvorrichtung bestehend aus einem Gerätestecker undloder einer Gerätesteckdose oder Steckverbindersatz daraus nach einem der Ansprüche 5 oder 6,
**dadurch gekennzeichnet, daß**
die Y-förmig miteinander verbundenen Rohrstücke (20,21,22;20',21',22') aus einem starren Kunststoffmaterial bestehen, das beständig gegen Elektrolytflüssigkeit ist.

8. Mehrpolige Steckvorrichtung oder Geräte-Steckvorrichtung bestehend aus einem Gerätestecker und/oder einer Gerätesteckdose oder Steckverbindersatz daraus nach Anspruch 6 oder 7,
**dadurch gekennzeichnet, daß**
die stiftförmigen Steckansätze (25') vor ihrem Endabschnitt eine Dichtung (27) aus einer auf seinem Außenumfang umlaufenden Aufnahmenut und einem dort einsetzbaren 4-Dichtungsring aufweisen.

9. Mehrpolige Steckvorrichtung oder Geräte-Steckvorrichtung bestehend aus einem Gerätestecker und/oder einer Gerätesteckdose oder Steckverbindersatz daraus nach Anspruch 5, 6 oder 7,
**dadurch gekennzeichnet, daß**
das Y-förmig mit den Rohrstücken (20,21 ;20',21') verbundene Rohrstück (22,22') gegenüber diesen in einer gemeinsamen Ebene geführten Rohrstücken in einer dazu versetzten Ebene geführt und an der Y-förmigen Verbindung in diese abgekröpft ist.

10. Mehrpolige Steckvorrichtung oder Geräte-Steckvorrichtung bestehend aus einem Gerätestecker und/oder einer Gerätesteckdose oder Steckverbindersatz daraus nach einem der Ansprüche 1-9,
**dadurch gekennzeichnet, daß**
die Fluid/Luftkontaktteile (8,9) an den Wandungen ihrer in die Aufnahmen (14,15; 14', 15') einsteckbaren Abschnitte (20,21 ;20',21') sich nach außen öffnende Eingriffsausnehmungen (28,29) aufweisen.

11. Mehrpolige Steckvorrichtung oder Geräte-Steckvorrichtung bestehend aus einem Gerätestecker und/oder einer Gerätesteckdose oder Steckverbindersatz daraus nach Anspruch 10,
**dadurch gekennzeichnet, daß**
die Eingriffsausnehmungen (28,29) der eingesteckten Fluid/Luftkontakte (8,9) unter einer im Ansatz (40,40') zur Bildung eines Führungsschlitzes angelegten Auslassung (16,16') zu liegen kommen, wobei die Auslassung (16,16') zur Oberseite des Kontaktaufnahmeteils (3,6) bis unterhalb eines dort befestigbaren Verschlußteiles (12,13) sich Öffnet, und daß in die Auslassung (16,16') eine Arretierplatte (17,17') einsteckbar ist, welche zur Haltung der Fluid/Luftkontaktteile (8,9) in deren Eingriffsausnehmungen (28,29) eingreift.

12. Mehrpolige Steckvorrichtung oder Geräte-Steckvorrichtung bestehend aus einem Gerätestecker und/oder einer Gerätesteckdose oder Steckverbindersatz daraus nach einem der Ansprüche 1-4,
**dadurch gekennzeichnet, daß**
Pilotkontakte (30,32) des ersten Pilotkontaktpaares in dem Gerätestecker und/oder der Gerätesteckdose angelegt sind, wobei diese innerhalb eines Adapters (31,33), welcher in die unteren Aufnahmen (14,15;14',15') eingesteckt ist, geführt und gehaltert sind.

13. Mehrpolige Steckvorrichtung oder Geräte-Steckvorrichtung bestehend aus einem Gerätestecker und/oder einer Gerätesteckdose oder Steckverbindersatz daraus nach Anspruch 12,
**dadurch gekennzeichnet, daß**
der Adapter (31,33) aus einem länglichen Bauteil mit zwei parallelen rohrförmigen Fortsätzen (37,38;37',38') besteht, welche von einem gemeinsamen Quersteg (36,39) ausgehen, wobei längs in den Fortsätzen und durch die Querstege (36,39) Längsaufnahmen (48,48') zum Einstecken jeweils eines Pilotkontaktes (30,32) sich erstrecken.

14. Mehrpolige Steckvorrichtung oder Gerätesteckvorrichtung bestehend aus einem Gerätestecker und/oder einer Gerätesteckdose oder Steckverbindersatz daraus nach Anspruch 13,
**dadurch gekennzeichnet, daß**
die beiden rohrförmigen Fortsätze (37,38;37',38') und deren gemeinsamer Quersteg (36,39) ein U-förmiges Bauteil bilden, wobei die Fortsätze einen Außenquerschnitt entsprechend dem Innenquerschnitt der unteren Aufnahmen (14,15;14',15') aufweisen und in einer gemeinsamen Ebene liegen.

15. Mehrpolige Steckvorrichtung oder Geräte-Steckvorrichtung bestehend aus einem Gerätestecker und/oder einer Gerätesteckdose oder Steckverbindersatz daraus nach Anspruch 13 oder 14,
**dadurch gekennzeichnet, daß**
auf der Oberseite der rohrförmigen Fortsätze (37,38;37',38') Ausnehmungen (34,34';35,35') angelegt sind, wobei bei eingestecktem Adapter (31,33) die Ausnehmungen unterhalb der im Ansatz (40,40') gebildeten Auslassung (16,16') zu liegen kommen.

16. Mehrpolige Steckvorrichtung oder Geräte-Steckvorrichtung bestehend aus einem Gerätestecker und/oder einer Gerätesteckdose oder Steckverbindersatz daraus nach einem der Ansprüche 13-15,
**dadurch gekennzeichnet, daß**
die Querstege (36,39) gegenüber dem Außendurchmesser der rohrförmigen Fortsätze (37,38;37',38') in einer größeren Höhe ausgebildet sind und auch größer als der Innenquerschnitt der unteren Aufnahmen (14,15;14',15').

17. Mehrpolige Steckvorrichtung oder Geräte-Steckvorrichtung bestehend aus einem Gerätestecker und/oder einer Gerätesteckdose oder Steckverbindersatz daraus nach einem der Ansprüche 13-16,
**dadurch gekennzeichnet, daß**
die Adapter (31,33) aus einem elastischen Gummi oder starrem Kunststoffmaterial ausgebildet sind.

18. Mehrpolige Steckvorrichtung oder Geräte-Steckvorrichtung bestehend aus einem Gerätestecker und/oder einer Gerätesteckdose oder Steckverbindersatz daraus nach einem der Ansprüche 12-17,
**dadurch gekennzeichnet, daß**
auf den Oberflächen der Pilotkontakthülsen (30) sowie Pilotkontaktstifte (32) sich nach außen öffnende Hinterschneidungen (42,43) in einem derartigen Abstand vom Stift- oder Hülsenansatz angelegt sind, daß diese bei eingeschobenen Pilotkontakten bzw. Adaptern unterhalb der Auslassung (16,16') zu liegen kommen und dabei im Gehäuse zwischen der in der Auslassung (16,16') eingeschobenen Arretierplatte (17,17') des Verschlußteiles (12,13), welche hinter den Hinterschneidungen (42,43) eingreift, und einem vorderen Anschlag im Bereich der Stirnfläche des Steckansatzes der Gerätesteckdose oder der Anformung des Schutzkragens des Gerätesteckers festgelegt sind.

19. Mehrpolige Steckvorrichtung oder Geräte-Steckvorrichtung bestehend aus einem Gerätestecker und/oder einer Gerätesteckdose oder Steckverbindersatz daraus nach einem der Ansprüche 11-18,
**dadurch gekennzeichnet, daß**
die Arretierplatte (17,17') an der Unterseite des Verschlußteils (12,13) in einem Winkel von 90° abstehend angeformt ist und eine zur Aufnahme des Codierstiftes (4) ausgerichtete Ausnehmung (18) aufweist, so daß durch den dort eingesteckten Codierstift (4) die Halterung des Verschlußteils (12,13) erfolgt.

20. Bausatz aus mehrpoligen Steckvorrichtungen und/oder einer Geräte-Steckvorrichtung mit Fluid/Luftkontaktteilen (8,9) für einen Fluid/Luftanschluß (25,25') nach einem der Ansprüche 1-19 mit Pilotkontakten (10,11) und zusätzlichen Pilotkontakten (30,32) und mit Adaptern (31,33) für das Pilotkontaktpaar (30,32).

21. Adapte (31,33) zur Lagerung von Pilotkontakten (30,32) in Kontaktaufnahmeteilen (3,6) von zur Aufnahme von Fluid/Luftkontaktteilen ausgebildeten Gerätesteckdosen oder Gerätesteckern nach einem der Ansprüche 1-4,
**dadurch gekennzeichnet, daß**
der Adapter (31,33) aus einem länglichen Bauteil mit zwei parallelen rohrförmigen Fortsätzen (37,38;37',38') besteht, welche von einem gemeinsamen Quersteg (36,39) ausgehen und wobei längs in den Fortsätzen und durch die Querstege (36,39) Längsaufnahmen (48,48') zum Einstecken jeweils eines zusätzlichen Pilotkontaktes sich erstrecken, wobei der Adapter (31,33) so ausgebildet ist, daß er in die unteren Aufnahmen (14,15;14',15') des Kontaktaufnahmeteils (3,6) einsteckbar ist, wobei die Pilotkontakte (30,32) des ersten Pilotkontaktpaares in diesen führbar und halterbar sind.

22. Adapter nach Anspruch 21,
**dadurch gekennzeichnet, daß**
die beiden rohrförmigen Fortsätze (37,38;37',38') und deren gemeinsamer Quersteg (36,39) ein U-förmiges Bauteil bilden, wobei die Fortsätze einen Außenquerschnitt entsprechend dem Innenquerschnitt der unteren Aufnahmen (14,15;14',15') aufweisen und in einer gemeinsamen Ebene liegen.

23. Adapter nach Anspruch 21 oder 22,
**dadurch gekennzeichnet, daß**
auf der Oberseite der rohrförmigen Fortsätze (37,38;37',38') Ausnehmungen (34,34';35,35') derart angelegt sind, daß bei eingestecktem Adapter (31,33) die Ausnehmungen unterhalb der im Ansatz (40,40') gebildeten Auslassung (16,16') zu liegen kommen.

24. Adapter nach Anspruch 21, 22 oder 23,
**dadurch gekennzeichnet, daß**
die Querstege (36,39) gegenüber dem Außendurchmesser der rohrförmigen Fortsätze (37,38;37',38') in einer größeren Höhe ausgebildet sind und auch größer als der Innendurchmesser der unteren Aufnahmen (14,15;14',15').

25. Adapter nach Anspruch 21, 22, 23 oder 24,
**dadurch gekennzeichnet, daß**
die Adapter (31,33) aus einem elastischen Gummi oder starrem Kunststoffmaterial gebildet sind.

26. Adapter nach Anspruch 23, 24 oder 25,
**dadurch gekennzeichnet, daß**
die Anlage der Ausnehmungen (34,34';35,35') der Adapter (31,33) entsprechend der auf den Oberflächen der Pilotkontakthülsen (31) sowie Pilotkontaktstifte (32) befindlichen, sich nach außen öffnenden Hinterschneidungen (42,43) erfolgt; die in einem derartigen Abstand vom Stift- oder Hülsenansatz angelegt sind, daß diese bei eingeschobenen Pilotkontakten unterhalb der Auslassung (16,16') zu liegen kommen und im Gehäuse zwischen der in der Auslassung (16,16') eingeschobenen Arrettierplatte (17,17') des Verschlußteiles (12,13), welche hinter den Hinterschneidungen (42,43) eingreift, und einem vorderen Anschlag im Bereich der Stirnfläche des Steckansatzes der Gerätesteckdose oder der Anformung des Schutzkragens des Gerätesteckers festgelegt sind.

27. Verwendung einer Steckvorrichtung und/oder Geräte-Steckvorrichtung oder eines Steckverbindersatzes daraus nach einem der Ansprüche 1-19 zur Herstellung
- eines Gerätesteckers oder einer Gerätedose mit zwei Hauptkontakten,
- eines Gerätesteckers oder einer Gerätedose mit zwei Hauptkontakten und zwei Pilotkontakten,
- eines Gerätesteckers oder einer Gerätedose mit zwei Hauptkontakten und vier Pilotkontakten, davon zwei Pilotkontakten mit Adaptern in den zwei zusätzlichen unteren Ausnehmungen am Steckgesicht,
- eines Gerätesteckers oder einer Gerätedose mit zwei Hauptkontakten und zwei Pilotkontakten und mit einem Luftkontaktteit mit zwei verzweigten, parallelen Abschnitten in den zwei unteren zusätzlichen Ausnehmungen
- und eines Gerätesteckers oder Gerätedose mit zwei Hauptkontakten ohne Pilotkontakte, aber mit Luftkontaktteil in dem Innern des Kontaktaufnahmeteils und der dortigen zwei unteren zusätzlichen, zum Steckgesicht geführten Ausnehmungen.

## Claims

1. Multipole plug-and-socket device or appliance coupler comprising an appliance plug and/or appliance socket-outlet or connector mated set thereof, in particular for the connection for electric industrial trucks, batteries or charging devices therefor in the form of a combined charging/plug-and-socket device having an electrical connection and having air ducts and/or air connections for a pneumatic transport system for the connection of an accumulator battery with gel- or electrolyte circulation to a power- and compressed-air supply unit, or having other fluid ducts and fluid-and electrical connections, e.g. for removing gases, replenishing acid and/or other battery fluids,
wherein the appliance plug and/or the appliance socket-outlet is provided in each case at least with an intermateable fluid-air connection and/or electric connection,
- the appliance socket-outlet has as a housing a contact receiving part (3) with a plug-in connector, which surrounds two main contact sleeves (1), which are disposed parallel to one another and between the receivers (41) of which a receiver (46) for a polarizing pin (4) is disposed centrally and offset in an upward direction, wherein two guide grooves, which extend parallel to one another and in plug-in direction of appliance plug and appliance socket-outlet, are formed laterally between the receiver of the polarizing pin and the remaining plug-in connector in an outward direction thereon,
- and the appliance plug has in each case a contact receiving part (6) as a housing, in which two receivers (41') with mutually parallel main contact pins (2) are disposed, which with their outer pin portions are surrounded by a protective shroud at the outer end of the appliance plug,
- of which one inner side is provided with two mutually parallel guide webs, which are dimensioned and disposed in such a way that the external contour of the guide webs in the mated state of appliance plug and appliance socket-outlet, in which the protective shroud surrounds the plug-in projection, engage into the outer guide grooves of the appliance plug, that disposed in the contact receiving part (3) of the appliance socket-outlet and in the contact receiving part (6) of the appliance plug in each case in longitudinal direction below the receivers (46; 41, 41') of the polarizing pin (4) and the main contacts (1, 2) are two receiving bores, which extend into the electrical plug-in face from the transverse wall to the interior of the contact receiving part (3, 6) up to the outer end face of the plug-in connector of the appliance socket-outlet or up to the transition in the contact receiving part (6) of the appliance plug to the protective shroud and into which pilot contacts of a first pilot contact pair are insertable and detachably fastenable,
**characterized in that**
said receiving bores for a first pilot contact pair are widened and lengthened to form a fluid/air connection in the form of receivers (14, 15; 14', 15') for the longitudinal guidance of tubular elongate fluid-air contact parts (8, 9), which comprise at least one inner service duct (44, 45; 44', 45') and are made of a plastics material resistant to electrolytic fluid and are insertable into the receivers (14, 15; 14', 15') and detachably fastenable there and open out in the plug-in connector of the appliance socket-outlet or in the interior of the protective shroud of the appliance plug having the at least one outer fluid/air connection (23, 25), wherein said fluid/air connections (23, 25) are aligned with pin- and jack-shaped connector (23', 25') for plugging over the appliance coupler, wherein in the receivers (14, 15; 14', 15') in each case as part of the coupler a fluid/air contact part (8, 9) is received or alternatively an adapter (31, 33) and the pilot contacts (30, 32) of the first pilot contact pair are receivable.

2. Multipole plug-and-socket device or appliance coupler comprising an appliance plug and/or an appliance socket-outlet or connector mated set thereof according to claim 1,
**characterized in that**
for mounting a second pilot contact pair (10, 11) extending from the plug-in connector as far as into the interior of the contact receiving part (3) of the appliance socket-outlet two spaced-apart parallel receivers (47) are disposed directly between the outer parallel receivers (41) of the main contact sleeves (1) for the mounting of pilot contact sleeves (10) and extend along said receivers (41) and the receiver (46) of the polarizing pin (4)
and that the appliance plug further comprises at least two receivers (47') for pilot contact pins (11) centrally between the outer receivers (41') of the main contact pins (2), wherein the receivers (47') extend along said receivers (41') and the receiver (46) of the polarizing pin (4), which receiver (46) is offset in an upward direction centrally between the receivers (41').

3. Multipole plug-and-socket device or appliance coupler comprising an appliance plug and/or an appliance socket-outlet or connector mated set thereof according to claim 1 or 2,
**characterized in that**
the two receivers (14, 15; 14', 15') are disposed below the receivers (46; 41, 41') and continued in the interior of the contact receiving part (3, 6) in a projection (40, 40') between and/or below the receivers (41, 41') of the main contacts (1, 2) and the receivers (47, 47') of the pilot contacts (10, 11), which extends from the inner housing transverse wall (19, 19'), in which the receiver of the main contacts (1, 2) and pilot contacts (10, 11; 30, 32) runs out in a forward direction, into the interior of the contact receiving part (3, 6).

4. Multipole plug-and-socket device or appliance coupler comprising an appliance plug and/or an appliance socket-outlet or connector mated set thereof according to claim 2 or 3,
**characterized in that**
they are provided with pilot contact sleeves(10) and/or pilot contact pins (11) of the second pilot contact pair in the receivers (47, 47').

5. Multipole plug-and-socket device or appliance coupler comprising an appliance plug and/or an appliance socket-outlet or connector mated set thereof according to one of claims 1-4,
**characterized in that**
the elongate fluid/air contact parts (8, 9), which have an inner service duct (44, 45; 44', 45'), comprise two elongate tubular pieces (20, 21; 20', 21'), which extend at a distance parallel to one another and are insertable into the bottom receivers (14, 15; 14', 15'), and a tubular piece (22, 22'), which is bent laterally at an angle and arranged in a Y shape with the tubular pieces (20, 21; 20', 21') and runs out to the end of the contact receiving part (3, 6), wherein said pipe piece (22, 22') runs out into an outer hose support (24, 26) for connection to the compressed-air or fluid supply unit or to the battery to be maintained.

6. Multipole plug-and-socket device or appliance coupler comprising an appliance plug and/or an appliance socket-outlet or connector mated set thereof according to one of claims 1-5,
**characterized in that**
the fluid/air connection (23) of the fluid/air contact part (8) insertable into the bottom receiver (14, 15) of the appliance socket-outlet comprises two jack-shaped connectors (23') and the fluid/air connection (25) of the fluid/air contact part (9) insertable into the receiver (14', 15') of the appliance plug comprises two pin-shaped connectors (25'), wherein the jack-shaped connectors (23') are pluggable over the outside of the connectors (25').

7. Multipole plug-and-socket device or appliance coupler comprising an appliance plug and/or an appliance socket-outlet or connector mated set thereof according to one of claims 5 or 6,
**characterized in that**
the tubular pieces (20, 21, 22; 20', 21', 22') connected in a y-shaped manner to one another are made of a rigid plastics material, which is resistant to electrolytic fluid.

8. Multipole plug-and-socket device or appliance coupler comprising an appliance plug and/or an appliance socket-outlet or connector mated set thereof according to claim 6 or 7,
**characterized in that**
the pin-shaped plug-in connectors (25') in front of their end portion have a seal (27) comprising a receiving groove, which runs round the outer periphery, and a sealing O-ring insertable therein.

9. Multipole plug-and-socket device or appliance coupler comprising an appliance plug and/or an appliance socket-outlet or connector mated set thereof according to claim 5, 6 or 7,
**characterized in that**
the tubular piece (22, 22') connected in a Y-shaped manner to the tubular pieces (20, 21; 20', 21') extends in relation to the latter, which extend in a common plane, in a plane offset thereto and at the Y-shaped connection is bent at an angle into said plane.

10. Multipole plug-and-socket device or appliance coupler comprising an appliance plug and/or an appliance socket-outlet or connector mated set thereof according to one of claims 1-9,
**characterized in that**
the fluid/air contact parts (8, 9) at the walls of their portions (20, 21; 20', 21') insertable into the receivers (14, 15; 14', 15') have outwardly opening engagement recesses (28, 29).

11. Multipole plug-and-socket device or appliance coupler comprising an appliance plug and/or an appliance socket-outlet or connector mated set thereof according to claim 10,
**characterized in that**
the engagement recesses (28, 29) of the inserted fluid/air contacts (8, 9) come to lie under a cavity (16, 16') disposed in the projection (40, 40') to form a guide slot, wherein the cavity (16, 16') opens towards the top of the contact receiving part (3, 6) as far as below a closure part (12, 13), which is fastenable there, and that an arresting plate (17, 17') is insertable into the cavity (16, 16') and, for holding the fluid/air contact parts (8, 9), engages into the engagement recesses (28, 29) of the latter.

12. Multipole plug-and-socket device or appliance coupler comprising an appliance plug and/or an appliance socket-outlet or connector mated set thereof according to one of claims 1-4,
**characterized in that**
pilot contacts (30, 32) of the first pilot contact pair are disposed in the appliance plug and/or in the appliance socket-outlet, wherein said pilot contacts are guided and mounted inside an adapter (31, 33), which is inserted into the bottom receivers (14, 15; 14', 15').

13. Multipole plug-and-socket device or appliance coupler comprising an appliance plug and/or an appliance socket-outlet or connector mated set thereof according to claim 12,
**characterized in that**
the adapter (31, 33) comprises an elongate component having two parallel tubular extensions (37, 38; 37', 38') emanating from a common transverse web (36, 39), wherein longitudinal receivers (48, 48') for the insertion of in each case one pilot contact (30, 32) extend longitudinally in the extensions and through the transverse webs (36, 39).

14. Multipole plug-and-socket device or appliance coupler comprising an appliance plug and/or an appliance socket-outlet or connector mated set thereof according to claim 13,
**characterized in that**
the two tubular extensions (37, 38; 37', 38') and their common transverse web (36, 39) form a U-shaped component, wherein the extensions have an outer cross section corresponding to the inner cross section of the bottom receivers (14, 15; 14', 15') and lie in a common plane.

15. Multipole plug-and-socket device or appliance coupler comprising an appliance plug and/or an appliance socket-outlet or connector mated set thereof according to claim 13 or 14,
**characterized in that**
recesses (34, 34'; 35, 35') are disposed at the top of the tubular extensions (37, 38; 37', 38'), wherein in the inserted state of the adapter (31, 33) the recesses come to lie below the cavity (16, 16') formed in the projection (40, 40').

16. Multipole plug-and-socket device or appliance coupler comprising an appliance plug and/or an appliance socket-outlet or connector mated set thereof according to one of claims 13-15,
**characterized in that**
the transverse webs (36, 39) are constructed, in relation to the outside diameter of the tubular extensions (37, 38; 37', 38'), with a greater height and also larger than the inner cross section of the bottom receivers (14, 15; 14', 15').

17. Multipole plug-and-socket device or appliance coupler comprising an appliance plug and/or an appliance socket-outlet or connector mated set thereof according to one of claims 13-16,
**characterized in that**
the adapters (31, 33) are made of a flexible rubber or rigid plastics material.

18. Multipole plug-and-socket device or appliance coupler comprising an appliance plug and/or an appliance socket-outlet or connector mated set thereof according to one of claims 12-17,
**characterized in that**
on the surfaces of the pilot contact sleeves (30) and pilot contact pins (32) outwardly opening undercuts (42, 43) are formed at such a distance from the pin-or sleeve connector that they come to lie, in the inserted state of the pilot contacts and/or adapters, below the cavity (16, 16') and are in said case fixed in the housing between the arresting plate (17, 17') of the closure part (12, 13), which arresting plate is inserted in the cavity (16, 16') and engages behind the undercuts (42, 43), and a front stop in the region of the end face of the plug-in connector of the appliance socket-outlet or the moulding of the protective shroud of the appliance plug.

19. Multipole plug-and-socket device or appliance coupler comprising an appliance plug and/or an appliance socket-outlet or connector mated set thereof according to one of claims 11-18,
**characterized in that**
the arresting plate (17, 17') is moulded on the underside of the closure part (12, 13) so as to project at an angle of 90° and has a recess (18), which is aligned for receiving the polarizing pin (4), so that the mounting of the closure part (12, 13) is effected by means of the polarizing pin (4) inserted there.

20. Assembly kit of multipole plug-and-socket devices and/or an appliance coupler with fluid/air contact parts (8, 9) for a fluid/air connection (25, 25') according to one of claims 1-19 with pilot contacts (10, 11) and additional pilot contacts (30, 32) and with adapters (31, 33) for the pilot contact pair (30, 32).

21. Adapter (31, 33) for mounting pilot contacts (30, 32) in contact receiving parts (3, 6) of appliance socket-outlets or appliance plugs designed to receive fluid/air contact parts according to one of claims 1-4,
**characterized in that**
the adapter (31, 33) comprises an elongate component having two parallel tubular extensions (37, 38; 37', 38') emanating from a common transverse web (36, 39) and wherein longitudinal receivers (48, 48') for the insertion of in each case one additional pilot contact extend longitudinally in the extensions and through the transverse webs (36, 39), wherein the adapter (31, 33) is designed in such a way that it is insertable into the bottom receivers (14, 15; 14', 15') of the contact receiving part (3, 6), wherein the pilot contacts (30, 32) of the first pilot contact pair are guidable and mountable in said bottom receivers.

22. Adapter according to claim 21,
**characterized in that**
the two tubular extensions (37, 38; 37', 38') and their common transverse web (36, 39) form a U-shaped component, wherein the extensions have an outer cross section corresponding to the inner cross section of the bottom receivers (14, 15; 14', 15') and lie in a common plane.

23. Adapter according to claim 21 or 22,
**characterized in that**
on the top of the tubular extensions (37, 38; 37', 38') recesses (34, 34'; 35, 35') are disposed in such a way that, in the inserted state of the adapter (31, 33), the recesses come to lie below the cavity (16, 16') formed in the projection (40, 40').

24. Adapter according to claim 21, 22 or 23,
**characterized in that**
the transverse webs (36, 39) are constructed, in relation to the outside diameter of the tubular extensions (37, 38; 37', 38'), with a greater height and also larger than the inside diameter of the bottom receivers (14, 15; 14', 15').

25. Adapter according to claim 21, 22, 23 or 24,
**characterized in that**
the adapters (31, 33) are made of a flexible rubber or rigid plastics material.

26. Adapter according to claim 23, 24 or 25,
**characterized in that**
the arrangement of the recesses (34, 34'; 35, 35') of the adapters (31, 33) is effected in accordance with the outwardly opening undercuts (42, 43), which are situated on the surfaces of the pilot contact sleeves (31) and pilot contact pins (32) and which are disposed at such a distance from the pin- or sleeve connector that they come to lie, in the inserted state of the pilot contacts, below the cavity (16, 16') and are fixed in the housing between the arresting plate (17, 17') of the closure part (12, 13), which arresting plate is inserted in the recess (16, 16') and engages behind the undercuts (42, 43), and a front stop in the region of the end face of the plug-in connector of the appliance socket-outlet or the moulding of the protective shroud of the appliance plug.

27. Use of a plug-and-socket device and/or appliance coupler or a connector mated set thereof according to one of claims 1-19 to produce
- an appliance plug or an appliance coupler with two main contacts,
- an appliance plug or an appliance coupler with two main contacts and two pilot contacts,
- an appliance plug or an appliance coupler with two main contacts and four pilot contacts, of which two pilot contacts with adapters in the two additional bottom recesses on the plug-in face,
- an appliance plug or an appliance coupler with two main contacts and two pilot contacts and with an air contact part having two branched parallel portions in the two bottom additional recesses
- and an appliance plug or an appliance coupler with two main contacts without pilot contacts, but with an air contact part in the interior of the contact receiving part and the two bottom additional recesses disposed there and extending to the plug-in face.

## Revendications

1. Dispositif de connexion multibroche ou fiche et socle de connecteur multibroche constitué par un socle connecteur et/ou par une prise mobile de connecteur ou bien par un jeu de connecteurs accouplés constitué par les derniers cités, en particulier à des fins d'alimentation pour des chariots de manutention électriques, des batteries ou des appareils de charge destinés auxdits chariots sous la forme d'une prise de courant de charge combinée comprenant une alimentation électrique et des canaux pour l'air et/ou des prises d'air pour un système de transport à air comprimé pour la connexion d'un accumulateur à circulation de gel ou d'électrolyte à une unité d'alimentation en courant électrique et à une unité d'alimentation en air comprimé, ou encore d'autres prises de courant et de fluides, par exemple pour l'évacuation de gaz, pour le remplissage de la batterie avec de l'acide et/ou avec d'autres liquides,
dans lequel le socle connecteur et/ou la prise mobile de connecteur sont respectivement munis d'au moins une prise de fluide/d'air et/ou d'une prise de courant aptes à être accouplées l'une à l'autre,
- la prise mobile de connecteur présente, sous forme de boîtier, un élément de réception de contact (3) comprenant un épaulement de connexion qui entoure deux connecteurs femelles principaux (1) disposés parallèlement l'un à l'autre, entre les évidements (41) desquels est disposé, en position médiane et en décalage vers le haut, un évidement (46) pour une broche de codage (4), dans lequel, en position latérale entre l'évidement de la broche de codage et le reste de l'épaulement de connexion, vers l'extérieur, sur ce dernier, sont formées deux rainures de guidage s'étendant parallèlement l'une à l'autre étant la direction de connexion du socle connecteur et de la prise mobile de connecteur,
- et le socle connecteur présente respectivement un élément de réception de contact (6) sous forme de boîtier,
dans lequel viennent s'appliquer deux évidements (41') comprenant des broches de contact principales disposées parallèlement l'une à l'autre, qui sont entourées, avec leur section de broche externe, par un collet de protection à l'extrémité externe du socle connecteur,
- dont un côté interne est muni de deux nervures de guidage disposées parallèlement l'une à l'autre, qui sont dimensionnées est réalisé de telle sorte que le contour externe des nervures de guidage, à l'état enfiché dans lequel le collet de protection entoure l'épaulement de connexion, vient s'engrener dans les rainures de guidage externes du socle connecteur, et de telle sorte que, dans l'élément de réception de contact (3) de la prise mobile de connecteur et dans l'élément de réception de contact (6) du socle connecteur, viennent s'appliquer respectivement, en direction longitudinale en dessous des évidements (46 ; 41, 41') de la broche de codage (4) et des contacts principaux (1, 2), deux alésages de réception, qui s'étendent dans la face de connexion électrique depuis la paroi transversale en direction de l'intérieur de l'élément de réception de contact (3, 6) jusqu'au côté frontal externe de l'épaulement de connexion de la prise mobile de connecteur ou jusqu'à la transition dans l'élément de réception de contact (6) du socle connecteur au collet de protection, alésages dans lesquels des contacts pilotes (30, 32) d'une première paire de contact pilote peuvent venir s'enficher et peuvent venir se fixer de manière amovible,
**caractérisé en ce que** ces alésages de réception pour une première paire de contacts pilotes dans le but de former une prise de fluide/d'air sont élargis et prolongés sous la forme d'évidements (14, 15 ; 14', 15') pour le guidage longitudinal d'éléments de contact par fluide/air (8, 9) oblongs de forme tubulaire, lesdits éléments présentant au moins un canal de guidage interne (44, 45 ; 44', 45'), étant constitués d'une matière synthétique résistant au liquide électrolytique et étant à même de s'enficher dans les évidements 14, 15; 14', 15') et de s'y fixer de manière amovible et débouchant dans l'épaulement de connexion de la prise mobile de connecteur ou à l'intérieur du collet de protection du socle connecteur comprenant au moins une prise de fluide/d'air externe (23, 25),
dans lequel ces prises de fluide/d'air (23, 25) sont disposées en alignement avec des épaulements mâles et des épaulements femelles (23', 25') à des fins de connexion avec la fiche et le socle de connecteur par recouvrement,
dans lequel, dans les évidements (14, 15 ; 14', 15'), vient se loger respectivement un élément de contact par fluide/air (8, 9), à titre de partie de la fiche et du socle de connecteur ou encore, en variante, peuvent venir se loger un adaptateur (31, 33) et les contacts pilotes (30, 32) de la première paire de contacts pilotes.

2. Dispositif de connexion multibroche ou fiche et socle de connecteur multibroche constitué par un socle connecteur et/ou par une prise mobile de connecteur ou bien par un jeu de connecteurs accouplés constitué par les derniers cités selon la revendication 1, **caractérisé en ce que**, pour le logement d'une deuxième paire de contacts pilotes (10, 11), deux évidements parallèles (47) écartés l'un de l'autre, s'étendant depuis l'épaulement de connexion jusqu'à l'intérieur de l'élément de réception de contact (3) de la prise mobile de connecteur, viennent s'appliquer directement entre les évidements parallèles externes (41) des connecteurs femelles principaux (1) pour le logement de connecteurs femelles pilotes (10) et s'étendent le long de ces évidements (41) et de l'évidement (46) de la broche de codage (4), et **en ce que** le socle connecteur présente en outre au moins deux évidements (47) pour des broches de contacts pilotes (11), en position médiane, entre les évidements externes (41') des broches de contacts principales (22), les évidements (47') s'étendant le long de ces évidements (41') et le long de l'évidement (46) de la broche de codage (4), disposé en position médiane entre les derniers cités, tout en étant décalé vers le haut.

3. Dispositif de connexion multibroche ou fiche et socle de connecteur multibroche constitué par un socle connecteur et/ou par une prise mobile de connecteur ou bien par un jeu de connecteurs accouplés constitué par les derniers cités selon la revendication 1 ou 2, **caractérisé en ce que** les deux évidements (14, 15 ; 14', 15') viennent s'appliquer en dessous des évidements (46 ; 41, 41') et se prolongent à l'intérieur de l'élément de réception de contact (3, 6) dans un épaulement (40, 40') entre les et/ou en dessous des évidements (41, 41') des contacts principaux (1, 2) et des évidements (47, 47') des contacts pilotes (10, 11), épaulement qui s'étend depuis la paroi transversale de boîtier interne (19, 19'), dans laquelle l'évidement des contacts principaux (1, 2) et des contacts pilotes (10, 11 ; 30, 32) s'étend vers l'avant, jusqu'à l'intérieur de l'élément de réception de contact (3, 6).

4. Dispositif de connexion multibroche ou fiche et socle de connecteur multibroche constitué par un socle connecteur et/ou par une prise mobile de connecteur ou bien par un jeu de connecteurs accouplés constitué par les premiers cités selon la revendication 2 ou 3, **caractérisé en ce qu'**il est muni de connecteurs femelles pilotes (10) et/ou de connecteurs mâles pilotes (11) de la deuxième paire de contacts pilotes dans les évidements (47, 47').

5. Dispositif de connexion multibroche ou fiche et socle de connecteur multibroche constitué par un socle connecteur et/ou par une prise mobile de connecteur ou bien par un jeu de connecteurs accouplés constitué par les premiers cités selon l'une quelconque des revendications 1 à 4,
**caractérisé en ce que** les éléments oblongs de contact par fluide/air (8, 9) présentant un canal de guidage interne (44, 45 ; 44', 45') sont constitués par deux parties tubulaires oblongues (20, 21 ; 20', 21') s'étendant parallèlement l'une à l'autre tout en étant écartées l'une de l'autre et aptes à venir s'enficher dans les évidements inférieurs (19,,15 ; 14', 15') et par une partie tubulaire (22, 22') appliquée sur les premières citées en formant un Y, présentant un coude latéral et s'étendant jusqu'à l'extrémité de l'élément de réception de contact (3, 6), cette partie tubulaire s'étendant dans un embout à olive externe (24, 26) à des fins de connexion à l'unité d'alimentation en air comprimé ou en fluide ou encore à la batterie à entretenir.

6. Dispositif de connexion multibroche ou fiche et socle de connecteur multibroche constitué par un socle connecteur et/ou par une prise mobile de connecteur ou bien par un jeu de connecteurs accouplés constitué par les premiers cités selon l'une quelconque des revendications 1 à 5,
**caractérisé en ce que** la prise de fluide/d'air (23) de l'élément de contact par fluide/air (8) apte à venir s'enficher dans l'évidement inférieur (14, 15) de la prise mobile de connecteur présente deux épaulements femelles (23') et la prise de fluide/d'air (25) de l'élément de contact par fluide/air (9) apte à venir s'enficher dans l'évidement (14', 15') du socle connecteur présente deux épaulements mâles (25'), les épaulements femelles (23') étant à même de se connecter avec les épaulements mâles (25') depuis l'extérieur par recouvrement.

7. Dispositif de connexion multibroche ou fiche et socle de connecteur multibroche constitué par un socle connecteur et/ou par une prise mobile de connecteur ou bien par un jeu de connecteurs accouplés constitué par les premiers cités selon l'une quelconque des revendications 5 ou 6,
**caractérisé en ce que** les parties tubulaires (20, 21, 22 ; 20', 21', 22') reliées l'une à l'autre en forme de Y sont constituées d'une matière synthétique rigide qui résiste aux fluides électrolytiques.

8. Dispositif de connexion multibroche ou fiche et socle de connecteur multibroche constitué par un socle connecteur et/ou par une prise mobile de connecteur ou bien par un jeu de connecteurs accouplés constitué par les premiers cités selon la revendication 6 ou 7, **caractérisé en ce que** les épaulements de connexion mâles (25') présentent, devant leur section terminale, un joint d'étanchéité (27) constitué par une rainure de réception périphérique sur sa périphérie externe et par un joint torique apte à venir s'y insérer.

9. Dispositif de connexion multibroche ou fiche et socle de connecteur multibroche constitué par un socle connecteur et/ou par une prise mobile de connecteur ou bien par un jeu de connecteurs accouplés constitué par les premiers cités selon la revendication 5, 6 ou 7, **caractérisé en ce que** la partie tubulaire (22, 22') reliée en formant un Y avec les parties tubulaires (20, 21 ; 20', 21') est guidée, par rapport à ces parties tubulaires guidées dans un plan commun, dans un plan décalé par rapport à ce dernier et forme un coude dans ce dernier à la liaison en forme de Y.

10. Dispositif de connexion multibroche ou fiche et socle de connecteur multibroche constitué par un socle connecteur et/ou par une prise mobile de connecteur ou bien par un jeu de connecteurs accouplés constitué par les premiers cités selon l'une quelconque des revendications 1 à 9,
**caractérisé en ce que** les éléments de contact par fluide/air (8, 9) présentent, sur les parois de leurs sections (20, 21) ; 20', 21') aptes à venir s'enficher dans les évidements (14, 15 ; 14',15'), des évidements d'engrènement (28, 29) s'ouvrant vers l'extérieur.

11. Dispositif de connexion multibroche ou fiche et socle de connecteur multibroche constitué par un socle connecteur et/ou par une prise mobile de connecteur ou bien par un jeu de connecteurs accouplés constitué par les premiers cités selon la revendication 10, **caractérisé en ce que** les évidements d'engrènement (28, 29) des contacts par fluide/air (8, 9) à l'état enfiché viennent se disposer en dessous d'un dispositif d'échappement (16, 16') dimensionné pour la formation d'une fente de guidage, le dispositif d'échappement (16, 16') s'ouvrant en direction du côté supérieur de l'élément de réception de contact (3, 6) jusqu'à un endroit situé en dessous d'un élément de fermeture (12, 13) apte à s'y fixer, et **en ce qu'**une plaque d'arrêt (17; 17') est à même de s'enficher dans le dispositif d'échappement (16, 16'), la plaque venant s'engrener, pour le maintien des éléments de contact par fluide/air (8, 9) dans des évidements d'engrènement (28, 29) de ces derniers.

12. Dispositif de connexion multibroche ou fiche et socle de connecteur multibroche constitué par un socle connecteur et/ou par une prise mobile de connecteur ou bien par un jeu de connecteurs accouplés constitué par les premiers cités selon l'une quelconque des revendications 1 à 4,
**caractérisé en ce que** des contacts pilotes (30, 32) de la première paire de contacts pilotes viennent s'appliquer dans le socle connecteur et/ou dans la prise mobile de connecteur, dans lequel ces derniers sont guidés et maintenus à l'intérieur d'un adaptateur (31, 33) qui est enfiché dans les évidements inférieurs (14, 15 ; 14',15').

13. Dispositif de connexion multibroche ou fiche et socle de connecteur multibroche constitué par un socle connecteur et/ou par une prise mobile de connecteur ou bien par un jeu de connecteurs accouplés constitué par les premiers cités selon la revendication 12, **caractérisé en ce que** l'adaptateur (31, 33) est constitué par un élément oblong comprenant deux saillies tubulaires parallèles (37, 38 ; 37', 38') qui prennent leur origine à une nervure transversale commune (36, 39), dans lequel, en direction longitudinale dans les saillies et à travers la nervure transversale (36, 39), des évidements longitudinaux (48, 48') s'étendent pour l'enfichage respectivement d'un contact pilote (30, 32).

14. Dispositif de connexion multibroche ou fiche et socle de connecteur multibroche constitué par un socle connecteur et/ou par une prise mobile de connecteur ou bien par un jeu de connecteurs accouplés constitué par les premiers cités selon la revendication 13, **caractérisé en ce que** les deux saillies tubulaires (37, 38 ; 37', 38') et leur nervure transversale commune (36, 39) forment un élément en U, les saillies présentant une section transversale externe correspondant à la section transversale interne des évidements inférieurs (14, 15 ; 14', 15') et étant disposées dans un plan commun.

15. Dispositif de connexion multibroche ou fiche et socle de connecteur multibroche constitué par un socle connecteur et/ou par une prise mobile de connecteur ou bien par un jeu de connecteurs accouplés constitué par les premiers cités selon la revendication 13 ou 14, **caractérisé en ce que** des évidements (34, 34' ; 35, 35') viennent s'appliquer sur le côté supérieur des saillies tubulaires (37, 38 ; 37', 38'), dans lequel, à l'état enfiché de l'adaptateur (31, 33), les évidements viennent se disposer en dessous du dispositif d'échappement (16, 16') formé dans la saillie (40, 40').

16. Dispositif de connexion multibroche ou fiche et socle de connecteur multibroche constitué par un socle connecteur et/ou par une prise mobile de connecteur ou bien par un jeu de connecteurs accouplés constitué par les premiers cités selon l'une quelconque des revendications 13 à 15,
**caractérisé en ce que** les nervures transversales (36, 39) sont réalisées à une hauteur supérieure par rapport au diamètre externe des saillies tubulaires (37, 38 ; 37', 38') et possèdent également une dimension supérieure à celle de la section transversale interne des évidements inférieurs (14, 15 ; 14', 15').

17. Dispositif de connexion multibroche ou fiche et socle de connecteur multibroche constitué par un socle connecteur et/ou par une prise mobile de connecteur ou bien par un jeu de connecteurs accouplés constitué par les premiers cités selon l'une quelconque des revendications 13 à 16,
**caractérisé en ce que** les adaptateurs (31, 33) sont réalisés en caoutchouc élastique ou en une matière synthétique rigide.

18. Dispositif de connexion multibroche ou fiche et socle de connecteur multibroche constitué par un socle connecteur et/ou par une prise mobile de connecteur ou bien par un jeu de connecteurs accouplés constitué par les premiers cités selon l'une quelconque des revendications 12 à 17,
**caractérisé en ce que**, sur les surfaces des connecteurs femelles pilotes (30) ainsi que des connecteurs mâles pilotes (32), viennent s'appliquer des contre-dépouilles (42, 43) s'ouvrant vers l'extérieur à une distance de l'épaulement mâle ou de l'épaulement femelle telle que ces derniers, à l'état inséré des contacts pilotes, respectivement des adaptateurs, viennent se disposer en dessous du dispositif d'échappement (16, 16') et viennent se fixer en l'occurrence dans le boîtier entre la plaque d'arrêt (17, 17') de l'élément de fermeture (12, 13), insérée dans le dispositif d'échappement (16, 16'), ladite plaque venant s'engrener derrière les contre-dépouilles (42_{,} 43), et une butée antérieure dans la zone de la face frontale de l'épaulement de connexion de la prise mobile de connecteur ou du profil du collet de protection du socle connecteur.

19. Dispositif de connexion multibroche ou fiche et socle de connecteur multibroche constitué par un socle connecteur et/ou par une prise mobile de connecteur ou bien par un jeu de connecteurs accouplés constitué par les premiers cités selon l'une quelconque des revendications 11 à 18,
**caractérisé en ce que** la plaque d'arrêt (17, 17') est façonnée de telle sorte qu'elle s'écarte du côté inférieur de l'élément de fermeture (12, 13) en formant un angle de 90 degrés et présente un évidement (18) dimensionné pour la réception de la broche de codage (4), de telle sorte que l'on obtient, via la broche de codage (4) enfichée à cet endroit, le maintien de l'élément de fermeture (12, 13).

20. Jeu de pièces détachées constitué par des dispositifs de connexion multibroches et/ou par des fiches et des socles de connecteurs multibroches comprenant deux éléments de contact par fluide/air (8, 9) pour une prise de fluide/air (25, 25') selon l'une quelconque des revendications 1 à 19, comprenant des contacts pilotes (10, 11) et des contacts pilotes supplémentaires (30, 32) et comprenant des adaptateurs (31, 33) pour la paire de contacts pilotes (30, 32).

21. Adaptateur (31, 33) pour le montage de contacts pilotes (30, 32) dans des éléments de réception de contacts (3, 6) de prises mobiles de connecteurs ou de socles connecteurs réalisés pour la réception d'éléments de contact par fluide/air selon l'une quelconque des revendications 1 à 4, **caractérisé en ce que** l'adaptateur (31, 33) est constitué par un élément oblong comprenant deux saillies tubulaires parallèles (37, 38 ; 37', 38') qui prennent leur origine dans une nervure transversale commune (36, 39) et dans lequel, en direction longitudinale dans les saillies et à travers la nervure transversale (36, 39) des évidements longitudinaux (48, 48') s'étendent pour l'enfichage respectivement d'un contact pilote supplémentaire, l'adaptateur (31, 33) étant réalisé de telle sorte qu'il est à même de s'enficher dans les évidements inférieurs (14, 15 ; 14', 15') de l'élément de réception de contact (3, 6), les contacts pilotes (30, 32) de la première paire de contacts pilotes étant à même d'être guidés et maintenus dans lesdits évidements.

22. Adaptateur selon la revendication 21, **caractérisé en ce que** les deux saillies tubulaires (37, 38 ; 37', 38') et leur nervure transversale commune (36, 39) forment un élément en U, les saillies présentant une section transversale externe correspondant à la section transversale interne des évidements inférieurs (14, 15 ; 14', 15') et étant disposées dans un plan commun.

23. Adaptateur selon la revendication 21 ou 22, **caractérisé en ce que** des évidements (34, 34' ; 35, 35') viennent s'appliquer sur le côté supérieur des saillies tubulaires (37, 38 ; 37', 38'), dans lequel, à l'état enfiché de l'adaptateur (31, 33), les évidements viennent se disposer en dessous du dispositif d'échappement (16, 16') formé dans la saillie (40, 40').

24. Adaptateur selon la revendication 21, 22 ou 23,
**caractérisé en ce que** les nervures transversales (36, 39) sont réalisées à une hauteur supérieure par rapport au diamètre externe des saillies tubulaires (37, 38 ; 37', 38') et possèdent également une dimension supérieure à celle de la section transversale interne des évidements inférieurs (14, 15 ; 14', 15').

25. Adaptateur selon la revendication 21, 22, 23 ou 24,
**caractérisé en ce que** les adaptateurs (31, 33) sont réalisés en caoutchouc élastique ou en une matière synthétique rigide.

26. Adaptateur selon la revendication 23, 24 ou 25,
**caractérisé en ce que**, le placement des évidements (34, 34' ; 35, 35') des adaptateurs (31, 33) a lieu de manière correspondante aux contre-dépouilles (42, 43) s'ouvrant vers l'extérieur, se trouvant sur les surfaces des connecteurs femelles pilotes (31) ainsi que des connecteurs mâles pilotes (32), et qui viennent s'appliquer à une distance de l'épaulement mâle ou de l'épaulement femelle telle que ces derniers, à l'état inséré des contacts pilotes, respectivement des adaptateurs, viennent se disposer en dessous du dispositif d'échappement (16, 16') et viennent se fixer en l'occurrence dans le boîtier entre la plaque d'arrêt (17, 17') de l'élément de fermeture (12, 13), insérée dans le dispositif d'échappement (16, 16'), ladite plaque venant s'engrener derrière les contre-dépouilles (42, 43), et une butée antérieure dans la zone de la face frontale de l'épaulement de connexion de la prise mobile de connecteur ou du profil du collet de protection du socle connecteur.

27. Utilisation d'un dispositif de connexion multibroche ou d'une fiche et d'un socle de connecteur multibroche constitué par un socle connecteur et/ou par une prise mobile de connecteur ou bien par un jeu de connecteurs accouplés constitué par les derniers cités selon l'une quelconque des revendications 1 à 19, pour la fabrication
- d'un socle connecteur ou d'une prise mobile de connecteur comprenant deux contacts principaux,
- d'un socle connecteur ou d'une prise mobile de connecteur comprenant deux contacts principaux et deux contacts pilotes,
- d'un socle connecteur ou d'une prise mobile de connecteur comprenant quatre contacts principaux et deux contacts pilotes, deux contacts pilotes comprenant des adaptateurs dans les deux évidements inférieurs supplémentaires pratiqués dans la face de connexion,
- d'un socle connecteur ou d'une prise mobile de connecteur comprenant deux contacts principaux et deux contacts pilotes et un élément de contact par terre comprenant deux sections parallèles ramifiées dans les deux évidements inférieurs supplémentaires,
- et d'un socle connecteur ou d'une prise mobile de connecteur comprenant deux contacts principaux en l'absence de contacts pilotes, mais comprenant un élément de contact par air à l'intérieur de l'élément de réception de contact et des deux évidements inférieurs supplémentaires disposés à cet endroit, guidés en direction de la face de connexion.
